(19)

Europäisches Patentamt
European Patent Office
Office européen des brevets

(11) **EP 3 101 668 A1**

(12) **EUROPEAN PATENT APPLICATION**
published in accordance with Art. 153(4) EPC

(43) Date of publication:
**07.12.2016 Bulletin 2016/49**

(21) Application number: **15743982.9**

(22) Date of filing: **30.01.2015**

(51) Int Cl.:
*H01G 9/20* (2006.01)   *H01L 51/44* (2006.01)

(86) International application number:
**PCT/JP2015/052712**

(87) International publication number:
**WO 2015/115607 (06.08.2015 Gazette 2015/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.01.2014   JP 2014015430**

(71) Applicant: **Fujikura Ltd.**
**Tokyo 135-8512 (JP)**

(72) Inventor: **KITSUDA Mami**
**Sakura-shi**
**Chiba 285-8550 (JP)**

(74) Representative: **Hoffmann Eitle**
**Patent- und Rechtsanwälte PartmbB**
**Arabellastraße 30**
**81925 München (DE)**

(54) **PHOTOELECTRIC CONVERSION ELEMENT**

(57)   A photoelectric conversion element has at least one photoelectric conversion cell. The photoelectric conversion cell includes a first base material having a transparent substrate, a second base material facing the first base material, and an oxide semiconductor layer provided between the first base material and the second base material. The at least one photoelectric conversion cell has a sealing portion that connects the first base material and the second base material of the at least one photoelectric conversion cell to each other, and the sealing portion has a first sealing portion provided between the first base material and the second base material. The first sealing portion has an annular outer sealing portion, and at least one inner sealing portion provided inside the outer sealing portion to form cell spaces, the number of which is the same as the number of photoelectric conversion cells. Further, a thickness of the outer sealing portion is larger than a thickness of the inner sealing portion.

# Fig.1

**Description**

TECHNICAL FIELD

The present invention relates to a photoelectric conversion element.

BACKGROUND ART

A dye-sensitized photoelectric conversion element has been drawing attention as a photoelectric conversion element using a dye since the price is low and high photoelectric conversion efficiency is obtained, and the dye-sensitized photoelectric conversion element has been variously developed.

A photoelectric conversion element using a dye such as the above-described dye-sensitized photoelectric conversion element includes at least one photoelectric conversion cell, and the photoelectric conversion cell includes a first conductive base material having a transparent substrate, a second base material such as a counter electrode facing the first base material, an annular sealing portion that connects the first base material and the second base material, and an oxide semiconductor layer disposed between the first base material and the second base material. The photoelectric conversion element can increase photoelectric conversion efficiency by allowing as much light as possible to reach the oxide semiconductor layer through the transparent substrate.

For example, a dye-sensitized solar cell module disclosed in Patent Document 1 below has been known as the above-described photoelectric conversion element using a dye. The dye-sensitized solar cell module disclosed in Patent Document 1 below has a plurality of dye-sensitized solar cells, and each of the plurality of dye-sensitized solar cells has a cell sealing portion provided between a counter electrode and a conductive substrate. In addition, cell sealing portions adjacent to each other are integrated with each other to form a sealing portion, and the sealing portion includes an annular portion and a partitioning portion that partitions an inner opening of the annular portion.

CITATION LIST

PATENT DOCUMENT

Patent Document 1: WO 2012/118028 A

SUMMARY OF THE INVENTION

PROBLEM TO BE SOLVED BY THE INVENTION

However, the above-described dye-sensitized solar cell module disclosed in Patent Document 1 has room for improvement in terms of durability.

The invention has been made in view of the above-described circumstances, and an object of the invention is to provide a photoelectric conversion element having excellent durability.

MEANS FOR SOLVING PROBLEM

As a result of earnest research focusing on a relation between a thickness of an annular portion which is present on the outside of a sealing portion and a thickness of a partitioning portion to solve the above-mentioned problem, the inventors have found that the above-mentioned problem can be solved by setting the thickness of the annular portion to be larger than the thickness of the partitioning portion.

That is, the invention is a photoelectric conversion element including at least one photoelectric conversion cell, wherein the photoelectric conversion cell includes a first base material having a transparent substrate, a second base material facing the first base material, and an oxide semiconductor layer provided between the first base material and the second base material, the at least one photoelectric conversion cell has a sealing portion connecting the first base material and the second base material of the at least one photoelectric conversion cell to each other, the sealing portion has a first sealing portion provided between the first base material and the second base material, and the first sealing portion has an annular outer sealing portion, and at least one inner sealing portion provided inside the outer sealing portion to form cell spaces, the number of the cell spaces being the same as the number of photoelectric conversion cells, wherein a thickness of the outer sealing portion is larger than a thickness of the inner sealing portion.

According to this photoelectric conversion element, since the thickness of the outer sealing portion is larger than the thickness of the inner sealing portion in the first sealing portion, it is possible to improve an adhesive force between the outer sealing portion and the first base material or the second base material of the at least one photoelectric conversion cell when compared to a case in which the thickness of the outer sealing portion is less than or equal to the thickness of the inner sealing portion. For this reason, the photoelectric conversion element of the invention may have excellent durability.

In the photoelectric conversion element, a ratio of the thickness of the outer sealing portion to the thickness of the inner sealing portion is preferably in a range of 1.1 to 2.0.

The photoelectric conversion element of the invention may have more excellent durability when compared to a case in which the ratio of the thickness of the outer sealing portion to the thickness of the inner sealing portion is out of the range.

In the photoelectric conversion element, a dye is normally supported in the oxide semiconductor layer.

In the photoelectric conversion element, the at least one photoelectric conversion cell may be configured as a plurality of photoelectric conversion cells, and the first sealing portion may have a plurality of annular first cell sealing portions including a portion of the outer sealing portion and the inner sealing portion partitioning an inner opening of the annular outer sealing portion, and surrounding the oxide semiconductor layer, and a sealing connection portion connecting the inner sealing portions to each other between inner sealing portions of first cell sealing portions adjacent to each other among the plurality of first cell sealing portions.

In the photoelectric conversion element, a width of the outer sealing portion is preferably narrower than a total width of a width of the sealing connection portion and a width of two inner sealing portions connected by the sealing connection portion.

In this case, an aperture ratio may be improved when compared to a case in which the width of the outer sealing portion is greater than or equal to the total width of the width of the sealing connection portion and the width of the two inner sealing portions connected by the sealing connection portion. Meanwhile, since the outer sealing portion has a larger thickness than that of the inner sealing portion, sufficient durability may be ensured even when the width of the outer sealing portion is narrower than the total width of the width of the sealing connection portion and the width of the two inner sealing portions connected by the sealing connection portion.

In the photoelectric conversion element, the width of the outer sealing portion is preferably greater than 50% and less than 100% of the total width.

Since the width of the outer sealing portion is less than 100% of the total width, an aperture ratio may be further improved when compared to a case in which the width of the outer sealing portion is greater than or equal to 100% of the total width. On the other hand, a distance at which moisture or the like enters from the atmosphere up to the inside of the photoelectric conversion cell further increases when compared to a case in which the width of the outer sealing portion is less than or equal to 50% of the total width. For this reason, it is possible to sufficiently inhibit moisture from entering from the outside through the outer sealing portion.

In the photoelectric conversion element, second base materials of two photoelectric conversion cells adjacent to each other are preferably separated from each other, and the sealing connection portion preferably has a main sealing connection portion body having the same thickness as a thickness of the inner sealing portion, and a protrusion portion protruding from the main sealing connection portion body to a gap between the second base materials of the two photoelectric conversion cells adjacent to each other.

In this case, since the sealing connection portion has a larger thickness than that of the inner sealing portion by a dimension corresponding to the protrusion portion, it is possible to sufficiently ensure an adhesive force between the sealing connection portion and the first base material or the second base material even when the thickness of the inner sealing portion is smaller than the thickness of the outer sealing portion. For this reason, when the inner sealing portion is connected to the sealing connection portion, more excellent durability may be obtained. In addition, since the sealing connection portion has a main sealing connection portion body having the same thickness as the thickness of the inner sealing portion, and the protrusion portion protruding from the main sealing connection portion body to the gap between the second base materials of the two photoelectric conversion cells adjacent to each other, even when the second base materials adjacent to each other attempt to come into contact with each other, the contact is inhibited by the protrusion portion of the sealing connection portion. For this reason, a short circuit between the second base materials may be prevented.

In the photoelectric conversion element, a height of the protrusion portion from the main sealing connection body is preferably in a range of 5 to 100% of a thickness of the second base material in the sealing connection portion.

In this case, it is possible to effectively ensure the adhesive force between the sealing connection portion and the first base material or the second base material. For this reason, when the inner sealing portion is connected to the sealing connection portion, more excellent durability may be obtained. In addition, even when the second base materials adjacent to each other attempt to come into contact with each other, the contact is effectively inhibited by the protrusion portion of the sealing connection portion.

In the photoelectric conversion element, a whole of the transparent substrate is preferably curved to be convex toward a side of the second base material.

In this case, light having a large incident angle may be concentrated by refraction of incident light.

In the photoelectric conversion element, the first base material preferably has a first electrode, and the second base material preferably has a second electrode.

In this case, since the first base material and the second base material have the first electrode and the second electrode, respectively, a distance between electrodes can be made smaller from the outer sealing portion toward the inner sealing portion side when the thickness of the outer sealing portion is larger than the thickness of the inner sealing portion. For this reason, the photoelectric conversion element may have an excellent photoelectric conversion characteristic.

In the invention, the "thickness of the outer sealing portion" refers to an average of a height of an inner circumferential surface of the outer sealing portion and a height of an outer circumferential surface of the outer sealing portion.

EFFECT OF THE INVENTION

According to the invention, a photoelectric conversion element having excellent durability is provided.

BRIEF DESCRIPTION OF DRAWINGS

Fig. 1 is an end view of the cut section illustrating a first embodiment of a photoelectric conversion element of the invention;
Fig. 2 is a plan view illustrating a portion of the first embodiment of the photoelectric conversion element of the invention;
Fig. 3 is a partial cross-sectional view illustrating a second base material of Fig. 1;
Fig. 4 is a plan view illustrating a pattern of a transparent conductive layer in the photoelectric conversion element of Fig. 1;
Fig. 5 is a plan view illustrating a first sealing portion of Fig. 1;
Fig. 6 is a plan view illustrating a second sealing portion of Fig. 1;
Fig. 7 is an end view of the cut section taken along the line VII-VII of Fig. 2;
Fig. 8 is a plan view illustrating a working electrode on which a connection portion for fixing a back seat is formed;
Fig. 9 is a plan view illustrating a first sealing portion forming body for forming the first sealing portion of Fig. 5;
Fig. 10 is a plan view illustrating a portion of a second embodiment of a photoelectric conversion element of the invention;
Fig. 11 is a plan view illustrating a portion of a third embodiment of a photoelectric conversion element of the invention;

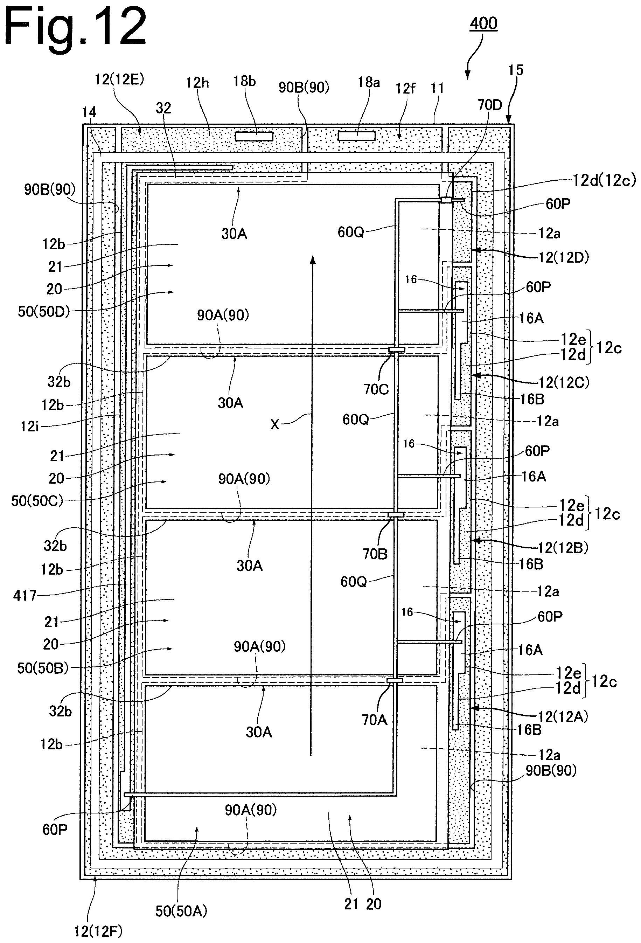

Fig. 12 is a plan view illustrating a portion of a fourth embodiment of a photoelectric conversion element of the invention;
Fig. 13 is a cross-sectional view illustrating a portion of a fifth embodiment of a photoelectric conversion element of the invention;
Fig. 14 is an end view of the cut section illustrating a portion of a sixth embodiment of a photoelectric conversion element of the invention; and
Fig. 15 is an end view of the cut section illustrating a portion of a seventh embodiment of a photoelectric conversion element of the invention.

MODE(S) FOR CARRYING OUT THE INVENTION

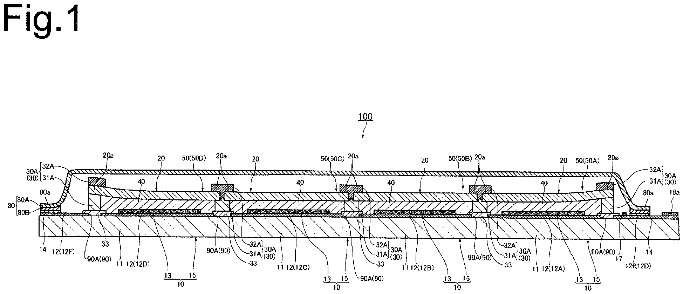

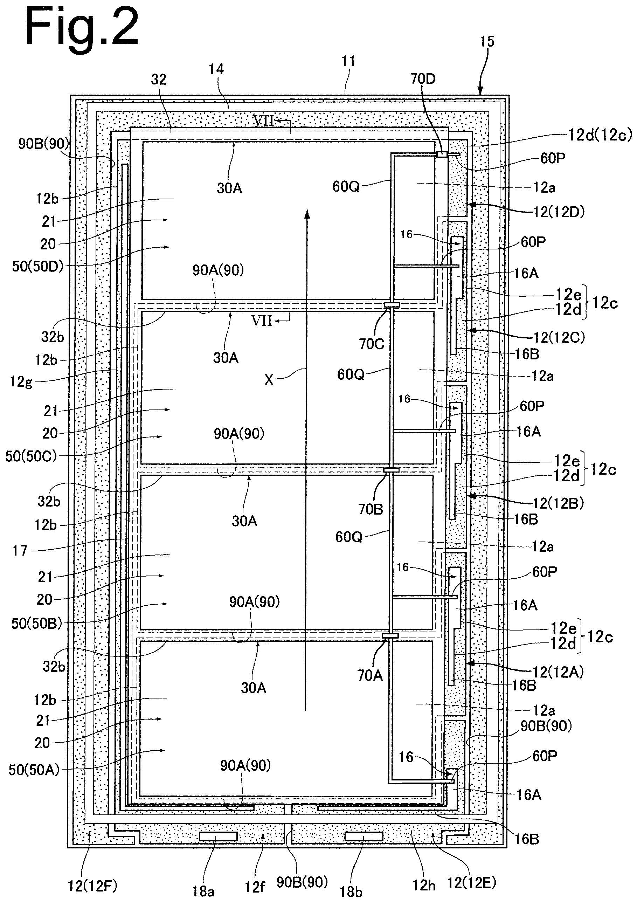

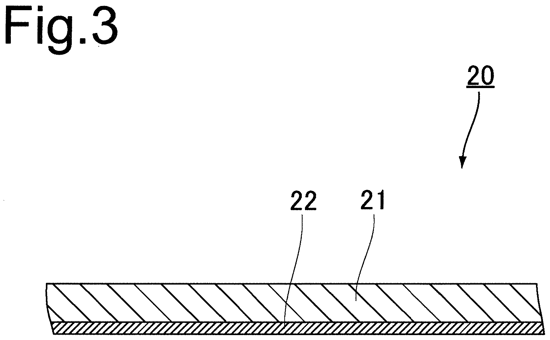

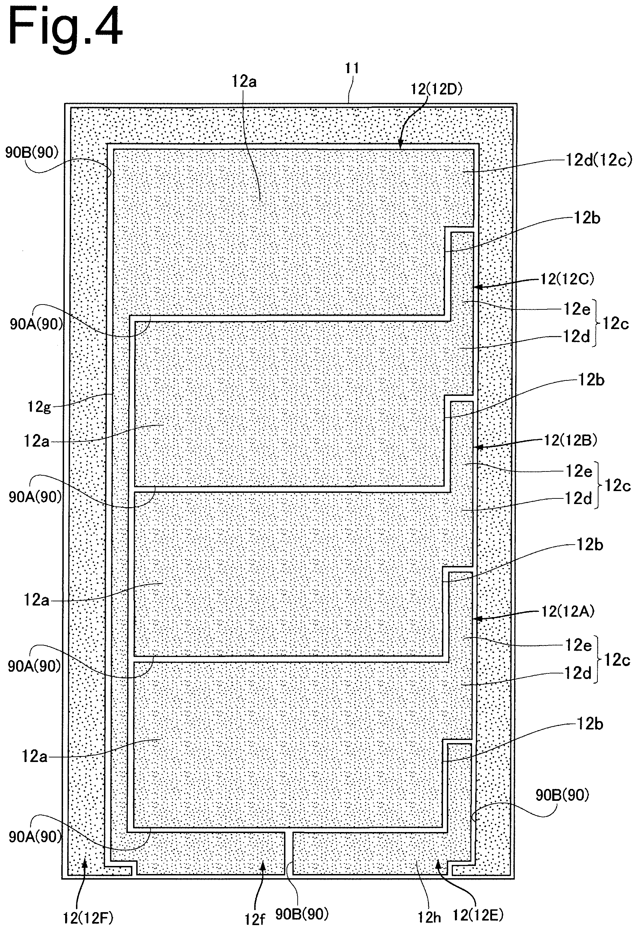

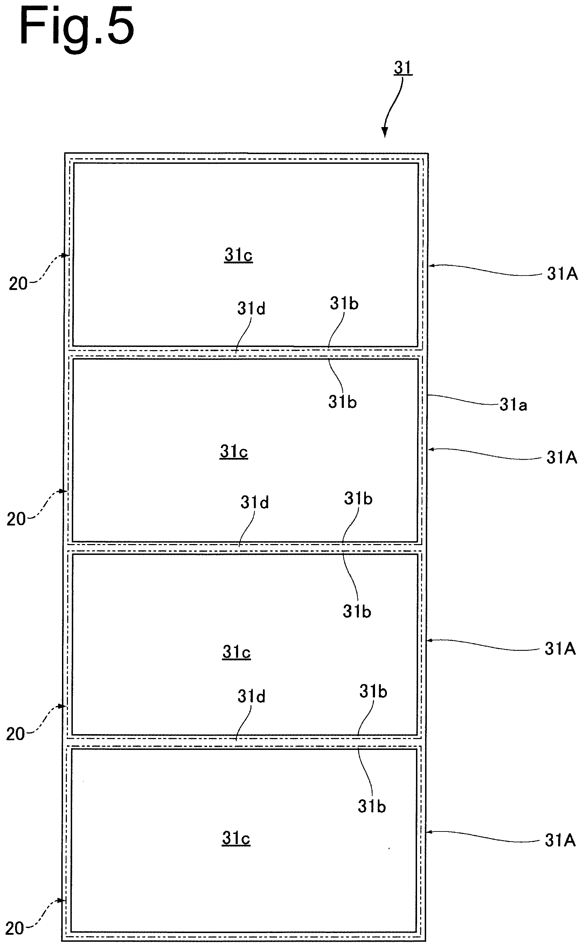

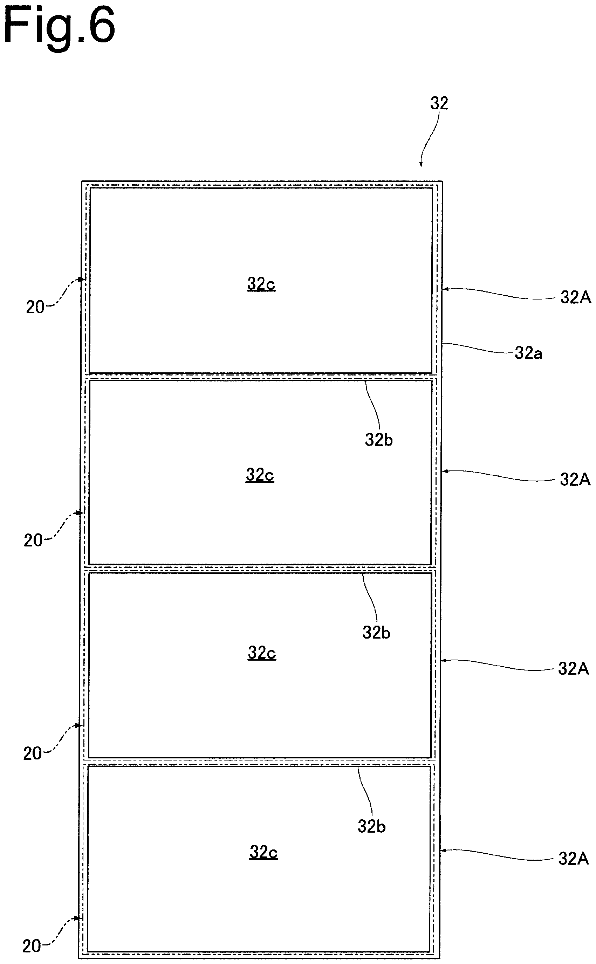

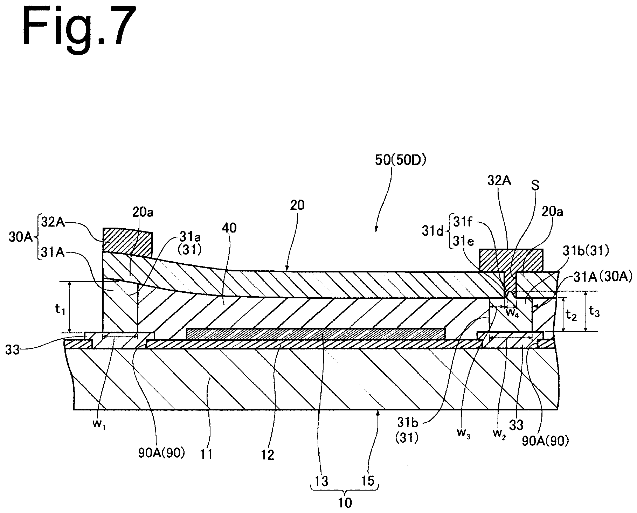

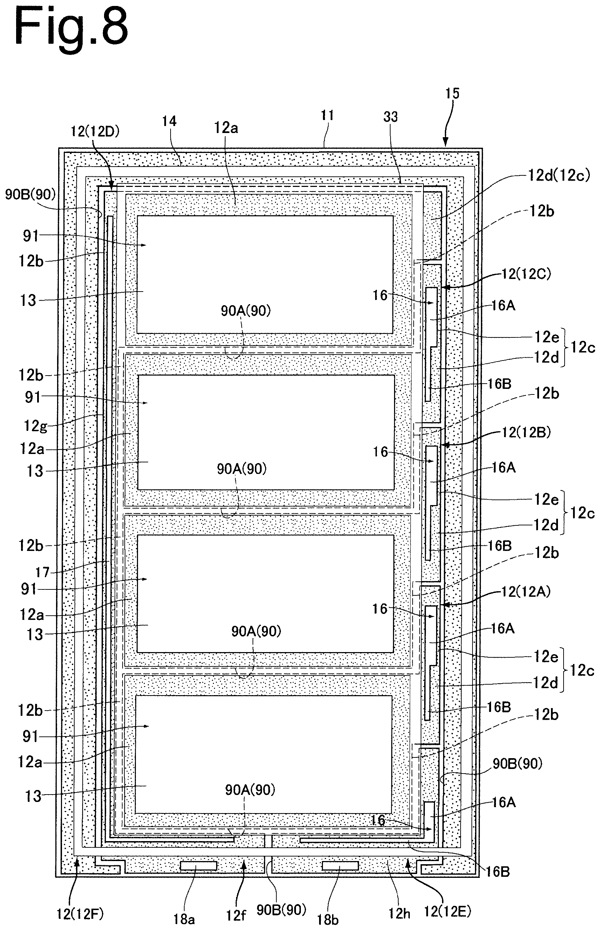

Hereinafter, preferred embodiments of a photoelectric conversion element of the invention will be described in detail with reference to Fig. 1 to Fig. 8. Fig. 1 is an end view of the cut section illustrating a first embodiment of a photoelectric conversion element of the invention, Fig. 2 is a plan view illustrating a portion of the first embodiment of the photoelectric conversion element of the invention, Fig. 3 is a partial cross-sectional view illustrating a second base material of Fig. 1, Fig. 4 is a plan view illustrating a pattern of a transparent conductive layer in the photoelectric conversion element of Fig. 1, Fig. 5 is a plan view illustrating a first sealing portion of Fig. 1, Fig. 6 is a plan view illustrating a second sealing portion of Fig. 1, Fig. 7 is an end view of the cut section taken along the line VII-VII of Fig. 2, and Fig. 8 is a plan view illustrating a working electrode on which a connection portion for fixing a back seat is formed.

As illustrated in Fig. 1, a photoelectric conversion element 100 includes a plurality of (four in Fig. 1) photoelectric conversion cells 50, and a back seat 80 provided to cover the photoelectric conversion cells 50. As illustrated in Fig. 2, the plurality of photoelectric conversion cells 50 is connected in series by a conductive material 60P. Hereinafter, the four photoelectric conversion cells 50 of the photoelectric conversion element 100 may be referred to as photoelectric conversion cells 50A to 50D for convenience of description.

As illustrated in Fig. 1, each of the plurality of photoelectric conversion cells 50 has a working electrode 10 having a first base material 15, and a second base material 20 facing the first base material 15. The plurality of photoelectric conversion cells 50 has a sealing portion 30 connecting the first base material 15 and the second base material 20, and the sealing portion 30 has a plurality of annular cell sealing portions 30A. A cell space formed by the first base material 15, the second base material 20, and the annular cell sealing portions 30A is filled with electrolyte 40.

As illustrated in Fig. 3, the second base material 20 includes a conductive substrate 21 serving both as a second electrode and a substrate, and a catalytic layer 22 provided on the first base material 15 side of the conductive substrate 21 to accelerate a catalytic reaction. That is, the second base material 20 includes a counter electrode. In addition, as illustrated in Fig. 1, in two photoelectric conversion cells 50 adjacent to each other, second base materials 20 are separated from each other. Further, the second base material 20 has flexibility.

As illustrated in Fig. 1 and Fig. 2, at least one oxide semiconductor layer 13 is provided on the first base material 15. A dye is supported in the oxide semiconductor layer 13. The working electrode 10 includes the first base material 15 and the oxide semiconductor layer 13. The first base material 15 includes a conductive substrate, and has a transparent substrate 11, a transparent conductive layer (or a transparent conductive film) 12 provided on the transparent substrate 11, an insulating material 33 provided on the transparent substrate 11, and a connecting terminal 16 provided on the transparent conductive layer 12. The oxide semiconductor layer 13 is surrounded by the annular cell sealing portions 30A. The transparent substrate 11 is used as a transparent substrate common to the photoelectric conversion cells 50A to 50D. That is, one transparent substrate 11 is provided for the photoelectric conversion cells 50A to 50D.

As illustrated in Figs. 2 and 4, the transparent conductive layer 12 is constituted by transparent conductive layers 12A to 12F which are provided in an insulated state. Namely, the transparent conductive layers 12A to 12F are arranged to interpose grooves 90. Herein, the transparent conductive layers 12A to 12D constitute the respective transparent conductive layers 12 as a first electrode of the plurality of photoelectric conversion cells 50A to 50D. In addition, the transparent conductive layer 12E is arranged so as to bend along the cell sealing portion 30A. The transparent conductive layer 12F is an annular transparent conductive layer 12 for fixing a peripheral edge portion 80a of the back sheet 80 (refer to Fig. 1).

As illustrated in Fig. 4, all of the transparent conductive layers 12A to 12D have a quadrangular-shaped main body portion 12a having a side edge portion 12b and a protruding portion 12c which laterally protrudes from the side edge portion 12b of the main body portion 12a.

As illustrated in Fig. 2, the protruding portion 12c of the transparent conductive layer 12C among the transparent conductive layers 12A to 12D has a projecting portion 12d which laterally projects with respect to the arrangement direction X of the photoelectric conversion cells 50A to 50D and a facing portion 12e which extends from the projecting portion 12d and faces the main body portion 12a of the adjacent photoelectric conversion cell 50D via the groove 90.

In the photoelectric conversion cell 50B as well, the protruding portion 12c of the transparent conductive layer 12B has the projecting portion 12d and the facing portion 12e. In addition, in the photoelectric conversion cell 50A as well, the protruding portion 12c of the transparent conductive layer 12A has the projecting portion 12d and the facing portion 12e.

Meanwhile, the photoelectric conversion cell 50D is connected with the photoelectric conversion cell 50C already and there is no other photoelectric conversion cell 50 to be connected. For this reason, in the photoelectric conversion cell 50D, the protruding portion 12c of the transparent conductive layer 12D does not have a facing portion 12e. In other words, the protruding portion 12c of the transparent conductive layer 12D is constituted by only the projecting portion 12d.

However, the transparent conductive layer 12D further has a first current extracting portion 12f for extracting the current generated in the photoelectric conversion element 100 to the outside and a connecting portion 12g which connects the first current extracting portion 12f with the main body portion 12a and extends along the side edge portion 12b of the transparent conductive layers 12A to 12C. The first current extracting portion 12f is disposed in the vicinity of the photoelectric conversion cell 50A and on the side opposite to the transparent conductive layer 12B with respect to the transparent conductive layer 12A.

On the other hand, the transparent conductive layer 12E also includes a second current extracting portion 12h for extracting the current generated by the photoelectric conversion element 100 to the outside, and the second current extracting portion 12h is arranged in the vicinity of the photoelectric conversion cell 50A and on the side opposite to the transparent conductive layer 12B with respect to the transparent conductive layer 12A. The first current extracting portion 12f and the second current extracting portion 12h are arranged to be adjacent to each other via the groove 90B (90) in the periphery of the photoelectric conversion cell 50A. Herein, the groove 90 is configured by a first groove 90A which is formed along an edge portion of the main body portion 12a of the transparent conductive layer 12 and a second groove 90B which is formed along an edge portion of a portion of the transparent conductive layer 12 excluding the main body portion 12a and intersects the peripheral edge portion 80a of the back sheet 80.

In addition, as illustrated in Fig.2, the connecting terminals 16 are provided on protruding portions 12c of the transparent conductive layers 12A to 12C and the transparent conductive layer 12E. Each connecting terminal 16 is constituted by a conductive material connecting portion 16A which is connected to the conductive material 60P and extends along the cell sealing portion 30A outside the cell sealing portion 30A and a conductive material non-connecting portion 16B as a conductive material non-connecting portion which extends from the conductive material connecting portion 16A along the cell sealing portion 30A outside the cell sealing portion 30A. In the embodiment, with respect to the transparent conductive layers 12A to 12C, at least the conductive material connecting portion 16A is provided on a counter portion 12e of the protruding portion 12c and faces a main body portion 12a of the connected adjacent photoelectric conversion cell 50. With respect to the transparent conductive layer 12E, the conductive material connecting portion 16A of the connecting terminal 16 faces the main body portion 12a of the connected adjacent photoelectric conversion cell 50A. In addition, a width of the conductive material non-connecting portion 16B is smaller than that of the conductive material connecting portion 16A. Herein, the width of the conductive material connecting portion 16A and the width of the conductive material non-connecting portion 16B are constant, respectively. Meanwhile, the width of the conductive material connecting portion 16A denotes a length in the direction perpendicular to the direction where the conductive material connecting portion 16A extends and the smallest width among the widths of the conductive material connecting portion 16A, and the width of the conductive material non-connecting portion 16B denotes a length in the direction perpendicular to the direction where the conductive material non-connecting portion 16B extends and the smallest width among the widths of the conductive material non-connecting portion 16B.

The conductive material connecting portion 16A of the connecting terminal 16 provided on the protruding portion 12c of the transparent conductive layer 12C in the photoelectric conversion cell 50C is connected to the conductive substrate 21 of the second base material 20 in the adjacent photoelectric conversion cell 50D through the conductive material 60P. The conductive material 60P is arranged so as to pass on the cell sealing portion 30A. Similarly, the conductive material connecting portion 16A of the connecting terminal 16 in the photoelectric conversion cell 50B is connected to the conductive substrate 21 of the second base material 20 in the adjacent photoelectric conversion cell 50C through the conductive material 60P, the conductive material connecting portion 16A of the connecting terminal 16 in the photoelectric conversion cell 50A is connected to the conductive substrate 21 of the second base material 20 in the adjacent photoelectric conversion cell 50B through the conductive material 60P, and the conductive material connecting portion 16A of the connecting terminal 16 on the transparent conductive layer 12E is connected to the conductive substrate 21 of the second base material 20 in the adjacent photoelectric conversion cell 50A through the conductive material 60P.

In addition, external connecting terminals 18a and 18b are provided on first and second current extracting portions 12f and 12h, respectively.

As illustrated in Fig. 1, the cell sealing portion 30A includes a first annular cell sealing portion 31A provided between the first base material 15 and the second base material 20, and a second cell sealing portion 32A which is provided to overlap the first cell sealing portion 31A and which sandwiches the joint edge portion 20a of the second base material 20 together with the first cell sealing portion 31A.. In addition, as illustrated in Fig. 5, first cell sealing portions 31A adjacent to each other are integrated with each other through a sealing connection portion 31d to form the first sealing portion 31. In other words, the first sealing portion 31 is constituted by an annular portion (hereinafter referred to as an "outer sealing portion") 31a which is not provided between two adjacent second base materials 20, a portion (hereinafter referred to as an "inner sealing portion") 31b which is provided between the two adjacent second base materials 20 and which partitions an inner opening 31c of the outer sealing portion 31a, and a sealing connection portion 31d which connects two adjacent inner sealing portions 31b to each other. Herein, the first cell sealing portion 31A is constituted by the inner sealing portion 31b, which partitions the inner opening 31c of the annular outer sealing portion 31a, and a portion of the outer sealing portion 31a, and surrounds the oxide semiconductor layer 13. The inner sealing portion 31b is provided to form cell spaces, the number of which is the same as the number of photoelectric conversion cells 50. In the present embodiment, six inner sealing portions 31b are provided to form the four photoelectric conversion cells 50 (see Fig. 5). Herein, in the first sealing portion 31, a thickness $t_1$ of the outer sealing portion 31a is larger than a thickness $t_2$ of the inner sealing portion (see Fig. 7). In addition, the sealing connection portion 31d is constituted by a main sealing connection portion body 31e having the same thickness as that of the inner sealing portion 31b, and a protrusion portion 31f that protrudes from the main sealing connection portion body 31e to a gap S between two second base materials 20 of DSCs adjacent to each other. That is, a maximum thickness $t_3$ of the sealing connection portion 31d is larger than the thickness $t_2$ of the inner sealing portion.

In addition, as illustrated in Fig. 6, second cell sealing portions 32A are integrated between adjacent second base materials 20 to form a second sealing portion 32. The second sealing portion 32 is constituted by an annular-shaped portion (hereinafter referred to as an "annular portion") 32a which is not provided between two adjacent second base materials 20, and a portion (hereinafter referred to as a "partitioning portion") 32b which is provided between two adjacent second base materials 20 and which partitions an inner opening 32c of the annular portion 32a.

In addition, as illustrated in Fig. 1, an insulating material 33 made of a glass frit is provided between the first cell sealing portion 31A and a groove 90 to penetrate into the groove 90 between transparent conductive layers 12A to 12F adjacent to each other and straddle the adjacent transparent conductive layers 12. Specifically, the insulating material 33 penetrates into a first groove 90A of the groove 90 formed along an edge portion of a main body portion 12a of the transparent conductive layer 12, and covers the edge portion of the main body portion 12a which forms the first groove 90A.

As illustrated in Fig. 7, a width $w_3$ of the inner sealing portion 31b is narrower than a width $w_1$ of the outer sealing portion 31a. Further, the width $w_1$ of the outer sealing portion 31a is narrower than a total width $w_2$ of a width $w_4$ of the sealing connection portion 31d and widths $w_3$ of two inner sealing portions 31b connected by the sealing connection portion 31d. In addition, the second cell sealing portion 32A is adhered to the first cell sealing portion 31A.

As illustrated in Fig. 1, a back sheet 80 is provided on the first base material 15. The back sheet 80 includes a stacked body 80A including a weather resistant layer and a metal layer and an adhesive portion 80B provided in the side opposite to the metal layer with respect to the stacked body 80A and adhered to the first base material 15 via a back sheet coupling portion 14. Herein, the adhesive portion 80B is used so as to adhere the back sheet 80 to the first base material 15, and as illustrated in Fig. 1, the adhesive portion may be formed in the peripheral edge portion of the stacked body 80A. However, the adhesive portion 80B may be provided over the entire surface of the photoelectric conversion cell 50 side of the stacked body 80A. The peripheral edge portion 80a of the back sheet 80 is connected to the transparent conductive layers 12D, 12E, and 12F of the transparent conductive layers 12 via the back sheet coupling portion 14 by the adhesive portion 80B. Herein, the adhesive portion 80B is separated from the cell sealing portion 30A of the photoelectric conversion cell 50. In addition, the back sheet coupling portion 14 is also separated from the cell sealing portion 30A. Meanwhile, the electrolyte 40is not filled in the space which is inside the back sheet 80 and outside the cell sealing portion 30A.

In addition, as illustrated in Fig. 2, in the transparent conductive layer 12D, a current collecting wiring 17 having a lower resistance than the transparent conductive layer 12D extends so as to pass through the main body portion 12a, the connecting portion 12g, and the current extracting portion 12f. This current collecting wiring 17 is disposed so as not to intersect with the back sheet coupling portion 14 of the back sheet 80 and the first base material 15. In other words, the current collecting wiring 17 is disposed on the inner side than the back sheet coupling portion 14.

Meanwhile, as illustrated in Fig. 2, bypass diodes 70A to 70D are connected in parallel with the photoelectric conversion cells 50A to 50D, respectively. Specifically, the bypass diode 70A is fixed on the partitioning portion 32b of the second sealing portion 32 between the photoelectric conversion cell 50A and the photoelectric conversion cell 50B, the bypass diode 70B is fixed on the partitioning portion 32b of the second sealing portion 32 between the photoelectric conversion cell 50B and the photoelectric conversion cell 50C, and the bypass diode 70C is fixed on the partitioning portion 32b of the second sealing portion 32 between the photoelectric conversion cell 50C and the photoelectric conversion cell 50D. The bypass diode 70D is fixed on the cell sealing portion 30A of the photoelectric conversion cell 50D. In addition, the conductive material 60Q is fixed to the conductive substrate 21 of the second base material 20 so as to pass through the bypass diodes 70A to 70D. Moreover, the conductive material 60P branches out from the conductive materials 60Q between the bypass diodes 70A and 70B, between the bypass diodes 70B and 70C, and between the bypass diodes 70C and 70D, respectively, and is connected with the conductive material connecting portion 16A on the transparent conductive layer 12A, the conductive material connecting portion 16A on the transparent conductive layer 12B, and the conductive material connecting portion 16A on the transparent conductive layer 12C, respectively. In addition, the conductive material 60P is also fixed to the conductive substrate 21 of the second base material 20 of the photoelectric conversion cell 50A, and this conductive material 60P connects the bypass diode 70A and the conductive material connecting portion 16A of the connecting terminal 16 on the transparent conductive layer 12E. Moreover, the bypass diode 70D is connected with the transparent conductive layer 12D via the conductive material 60P.

In addition, a desiccant (not shown) may or may not be provided on the second base material 20 of each photoelectric conversion cell 50, it is preferable that the desiccant be provided.

According to the above-described photoelectric conversion element 100, since the thickness $t_1$ of the outer sealing portion 31a is larger than the thickness $t_2$ of the inner sealing portion, it is possible to increase an adhesive force between the outer sealing portion 31a and the first base material 15 or the second base material 20 when compared to a case in which the thickness $t_1$ of the outer sealing portion 31a is less than or equal to the thickness $t_2$ of the inner sealing portion 31b. For this reason, according to the photoelectric conversion element 100, excellent durability may be obtained.

In addition, in the photoelectric conversion element 100, a distance between electrodes may be made smaller from the outer sealing portion 31a toward the inner sealing portion 31b side since the thickness $t_1$ of the outer sealing portion 31a is larger than the thickness $t_2$ of the inner sealing portion 31b. For this reason, the photoelectric conversion element 100 may have an excellent photoelectric conversion characteristic.

Further, in the photoelectric conversion element 100, even when the thickness $t_2$ of the inner sealing portion 31b is smaller than the thickness $t_1$ of the outer sealing portion 31a, more excellent durability may be obtained by connecting the inner sealing portion 31b to the sealing connection portion 31d since the sealing connection portion 31d has a larger thickness than that of the inner sealing portion 31b by a dimension corresponding to the protrusion portion 31f. In addition, the sealing connection portion 31d includes the main sealing connection portion body 31e having the same thickness as that of the inner sealing portion 31b, and the protrusion portion 31f protruding from the main sealing connection portion body 31e to the gap S between second base materials 20 of two photoelectric conversion cells 50 adjacent to each other. Therefore, even when adjacent second base materials 20 attempt to come into contact with each other, the contact is inhibited by the protrusion portion 31f of the sealing connection portion 31d, and thus a short circuit between the second base materials 20 can be prevented.

Furthermore, in the photoelectric conversion element 100, the groove 90 is formed along the edge portion of the transparent conductive layer 12, and the groove 90 has the first groove 90A formed along the edge portion of the main body portion 12a of the transparent conductive layer 12 disposed inside the annular cell sealing portion 30A. In addition, the insulating material 33 made of the glass frit penetrates into the first groove 90A, and the insulating material 33 covers the edge portion of the main body portion 12a which forms the first groove 90A. For this reason, even when a crack is formed along the groove 90 at a position inside the transparent substrate 11 and below the groove 90, and the crack continues up to the edge portion of the main body portion 12a, the insulating material 33 sufficiently inhibits moisture from entering from an outside of the cell sealing portion 30A through the crack. In particular, in the photoelectric conversion element 100, since the insulating material 33, which covers the edge portion of the main body portion 12a forming the first groove 90A and penetrates into the first groove 90A, is made of the glass frit, the insulating material has high sealing performance when compared to a case in which the insulating material 33 is resin. For this reason, according to the photoelectric conversion element 100, excellent durability may be obtained.

In addition, in the photoelectric conversion element 100, the cell sealing portion 30A and the insulating material 33 are disposed to overlap each other. For this reason, it is possible to further increase an area of a portion that contributes to power generation viewed from a light receiving surface side of the photoelectric conversion element 100 when compared to a case in which the insulating material 33 is disposed not to overlap the cell sealing portion 30A. For this reason, an aperture ratio may be more improved.

In addition, in the photoelectric conversion element 100, the first current extracting portion 12f and the second current extracting portion 12h are disposed in the vicinity of the photoelectric conversion cell 50A and on the side opposite to the transparent conductive layer 12B with respect to the transparent conductive layer 12A, and the first current extracting portion 12f of the transparent conductive layer 12D and the second current extracting portion 12h of the transparent conductive layer 12E are disposed so as to be adjacent to each other via the groove 90. For this reason, in the photoelectric conversion element 100, it is possible to dispose the external connecting terminals 18a and 18b to the first current extracting portion 12f and the second current extracting portion 12h, respectively, so as to be adjacent to each other. Hence, it is possible to set the number of connectors for extracting the current from the external connecting terminals 18a and 18b to the outside to one. In other words, since the first current extracting portion 12f and the second current extracting portion 12h are disposed to be greatly spaced apart from each other, the first current extracting portion 12f is disposed on the side opposite to the transparent conductive layer 12C with respect to the transparent conductive layer 12D, the external connecting terminals 18a and 18b are disposed to be greatly spaced apart from each other as well. In this case, two connectors of a connector to be connected with the external connecting terminal 18a and a connector to be connected with the external connecting terminal 18b are required in order to extract the current from the photoelectric conversion element 100. However, according to the photoelectric conversion element 100, since it is possible to dispose the external connecting terminals 18a and 18b so as to be adjacent to each other, only one connector is required. For this reason, according to the photoelectric conversion element 100, it is possible to achieve space saving. In addition, the generated current is low in the photoelectric conversion element 100 when the photoelectric conversion element 100 is used under a low illuminance. Specifically, the generated current is 2 mA or lower. For this reason, it is possible to sufficiently suppress the deterioration of the photoelectric conversion performance of the photoelectric conversion element 100 even if a part of the transparent conductive layer 12D of the photoelectric conversion cell 50D on one end side of the photoelectric conversion cell 50A and photoelectric conversion cell 50D at both ends of the photoelectric conversion cells 50A to 50D is disposed next to the second current extracting portion 12h which is electrically connected with the conductive substrate 21 of the second base material 20 of the photoelectric conversion cell 50A on the other end side via the groove 90 as the first current extracting portion 12f.

In addition, in the photoelectric conversion element 100, the photoelectric conversion cells 50A to 50D are arranged in a line along the X direction, the transparent conductive layer 12D of the photoelectric conversion cell 50D on one end side of the photoelectric conversion cell 50A and photoelectric conversion cell 50D at both ends of the photoelectric conversion cells 50A to 50D has the main body portion 12a provided on the inner side of the cell sealing portion 30A, the first current extracting portion 12f, and the connecting portion 12g which connects the main body portion 12a and the first current extracting portion 12f. For this reason, it is possible to more shorten the installation region of the connecting terminal 16 provided along the arrangement direction (X direction in Fig. 2) of the photoelectric conversion cells 50A to 50D in order to connect two adjacent photoelectric conversion cells 50 compared to a case in which the photoelectric conversion cells 50C and 50D of a part of the photoelectric conversion cells 50A to 50D are folded back in the middle and the photoelectric conversion cell 50A and the photoelectric conversion cell 50D are disposed so as to be adjacent to each other, and thus it is possible to achieve space saving to a greater extent. Furthermore, according to the photoelectric conversion element 100, since the generated current is usually low in a case in which the photoelectric conversion element 100 is used in a low illuminance environment, it is possible to sufficiently suppress the deterioration of the photoelectric conversion characteristics even if the photoelectric conversion element 100 further has the first connecting portion 12g which connects the main body portion 12a and the first current extracting portion 12f.

In addition, in the photoelectric conversion element 100, the current collecting wiring 17 is arranged so as not to intersect the back sheet coupling portion 14 between the back sheet 80 and the first base material 15. Since the current collecting wiring 17 is generally porous, the current collecting wiring has gas permeability, and thus, gases such as water vapor are permeable. However, the current collecting wiring 17 is arranged so as not to intersect the back sheet coupling portion 14 between the back sheet 80 and the first base material 15. For this reason, the infiltration of water vapor or the like from the outside through the current collecting wiring 17 into the space between the back sheet 80 and the first base material 15 can be prevented. As a result, the photoelectric conversion element 100 can have excellent durability. In addition, since the resistance of the current collecting wiring 17 is lower than that of the transparent conductive layer 12D, even when a generating current becomes large, a deterioration in photoelectric conversion characteristics can be sufficiently suppressed.

Furthermore, the connecting terminal 16 is less likely to peel off from the protruding portion 12c of the transparent conductive layer 12 as the width of the connecting terminal 16 is narrower in a case in which the photoelectric conversion element 100 is placed in an environment in which the temperature change is great. With regard to that point, in the photoelectric conversion element 100, the conductive material non-connecting portion 16B of the connecting terminal 16 has a narrower width than the conductive material connecting portion 16A connected with the conductive material 60P. For this reason, the conductive material non-connecting portion 16B of the connecting terminals 16 is less likely to peel off from the protruding portion 12c of the transparent conductive layer 12. Hence, the conductive material non-connecting portion 16B does not peel off from the transparent conductive layer 12 and thus it is possible to maintain the connection with the transparent conductive layer 12 even if the conductive material connecting portion 16A peels off from the protruding portion 12c of the transparent conductive layer 12. Furthermore, it is possible to normally operate the photoelectric conversion element 100 even if the conductive material connecting portion 16A peels off from the protruding portion 12c of the transparent conductive layer 12. Consequently, according to the photoelectric conversion element 100, it is possible to improve the connection reliability. In addition, the conductive material 60P connected with the conductive substrate 21 of the second base material 20 of one photoelectric conversion cell 50 of two adjacent photoelectric conversion cells 50 is connected with the conductive material connecting portion 16A on the protruding portion 12c of the other photoelectric conversion cell 50, and the conductive material connecting portion 16A is provided on the protruding portion 12c and the outer side of the cell sealing portion 30A. In other words, the connection of two adjacent photoelectric conversion cells 50 is performed on the outer side of the cell sealing portion 30A. For this reason, according to the photoelectric conversion element 100, it is possible to improve the aperture ratio.

In addition, in the photoelectric conversion element 100, in the photoelectric conversion cell 50 that is connected with the adjacent photoelectric conversion cell 50 among the photoelectric conversion cells 50A to 50D, the protruding portion 12c has the projecting portion 12d which laterally projects from the main body portion 12a and the facing portion 12e which extends from the projecting portion 12d and faces the main body portion 12a of the adjacent photoelectric conversion cell 50, and at least the conductive material connecting portion 16A of the connecting terminal 16 is provided on the facing portion 12e.

In this case, since at least the conductive material connecting portion 16A of the connecting terminal 16 is provided on the facing portion 12e facing the main body portion 12a of the adjacent photoelectric conversion cell 50, it is possible to sufficiently prevent the conductive material 60P connected with the conductive material connecting portion 16A from passing over the conductive substrate 21 of the second base material 20 of the adjacent photoelectric conversion cell 50 unlike the case in which at least the conductive material connecting portion 16A of the connecting terminal 16 is not provided on the facing portion 12e facing the main body portion 12a of the adjacent photoelectric conversion cell 50. As a result, it is possible to sufficiently prevent the short circuit between the adjacent photoelectric conversion cells 50.

In addition, in the photoelectric conversion element 100, both of the conductive material connecting portion 16A and the conductive material non-connecting portion 16B are disposed along the cell sealing portion 30A. For this reason, it is possible to save the space required for the connecting terminal 16 compared to the case of disposing the conductive material connecting portion 16A and the conductive material non-connecting portion 16B along the direction away from the cell sealing portion 30A.

Furthermore, in the photoelectric conversion element 100, the adhesive portion 80B of the back sheet 80 is spaced apart from the cell sealing portion 30A of the photoelectric conversion cell 50. For this reason, it is sufficiently suppressed that the cell sealing portion 30A is stretched since the adhesive portion 80B is constricted at a low temperature and thus an excessive stress is applied to the interface between the cell sealing portion 30A and the first base material 15 or the second base material 20. In addition, at a high temperature as well, it is sufficiently suppressed that the cell sealing portion 30A is pressed since the adhesive portion 80B expands and thus an excessive stress is applied to the interface between the cell sealing portion 30A and the first base material 15 or the second base material 20. In other words, it is sufficiently suppressed that an excessive stress is applied to the interface between the cell sealing portion 30A and the first base material 15 or the second base material 20 both at a high temperature and a low temperature.

For this reason, it is possible for the photoelectric conversion element 100 to exhibit excellent durability.

In addition, in the photoelectric conversion element 100, the width $w_3$ of the inner sealing portion 31b is narrower than the width $w_1$ of the outer sealing portion 31a. For this reason, it is possible to more sufficiently improve an aperture ratio in the photoelectric conversion element 100. Further, in the photoelectric conversion element 100, the first cell sealing portions 31A adjacent to each other and the second cell sealing portion 32A adjacent to each other are integrated with each other between second base materials 20 adjacent to each other. Herein, when the first cell sealing portions 31A adjacent to each other are not integrated with each other, two sealing portions are exposed to the atmosphere between photoelectric conversion cells 50 adjacent to each other. In contrast, in the photoelectric conversion element 100, since the first cell sealing portions 31A adjacent to each other are integrated with each other, one sealing portion is exposed to the atmosphere between the photoelectric conversion cells 50 adjacent to each other. That is, since the first sealing portion 31 is constituted by the outer sealing portion 31a, the inner sealing portion 31b, and the sealing connection portion 31d, only one sealing portion exposed to the atmosphere between the photoelectric conversion cells 50 adjacent to each other is the sealing connection portion 31d is. In addition, since the first cell sealing portions 31A are integrated with each other, a distance at which moisture or the like enters from the atmosphere up to the electrolyte 40 increases. For this reason, it is possible to sufficiently reduce the amount of moisture or air entering from the outside of the photoelectric conversion cell 50 between the adjacent photoelectric conversion cells 50. That is, sealing performance of the photoelectric conversion element 100 can be sufficiently improved. In addition, according to the photoelectric conversion element 100, the adjacent first cell sealing portions 31A are integrated with each other. For this reason, even when the width $w_3$ of the inner sealing portion 31b is narrower than the width $w_1$ of the outer sealing portion 31a, a sufficient sealing width may be ensured in the inner sealing portion 31b and the sealing connection portion 31d. That is, according to the photoelectric conversion element 100, it is possible to sufficiently increase adhesive strength between the first cell sealing portion 31A and the first base material 15 and adhesive strength between the first cell sealing portion 31A and the second base material 20 while improving an aperture ratio. As a result, in addition to improving an aperture ratio, it is possible to sufficiently inhibit the first cell sealing portion 31A from peeling off the first base material 15 and the second base material 20, and thus to obtain excellent durability even when the electrolyte 40 expands, and thus excessive stress is applied from an inside toward an outside of the first cell sealing portion 31A in a case in which the photoelectric conversion element 100 is used at a high temperature.

Further, in the photoelectric conversion element 100, the width $w_1$ of the outer sealing portion 31a is narrower than the total width $w_2$. In this case, an aperture ratio can be further improved when compared to a case in which the width $w_1$ of the outer sealing portion 31a is greater than or equal to the total width $w_2$. Meanwhile, since the outer sealing portion 31a has a larger thickness than that of the inner sealing portion 31b, sufficient durability can be ensured even when the width $w_1$ of the outer sealing portion 31a is set to be narrower than the total width $w_2$.

In addition, in the photoelectric conversion element 100, the second cell sealing portion 32A is adhered to the first cell sealing portion 31A, and the joint edge portion 20a of the second base material 20 is sandwiched by the first cell sealing portion 31A and the second cell sealing portion 32A. For this reason, even when stress is applied to the second base material 20 in a direction in which the second base material is separated from the working electrode 10, peeling-off is sufficiently suppressed by the second cell sealing portion 32A. Further, since the partitioning portion 32b of the second sealing portion 32 is adhered to the first cell sealing portion 31A through the gap S between the adjacent second base materials 20, the second base materials 20 of the photoelectric conversion cells 50 adjacent to each other are reliably prevented from contacting each other.

Next, the first base material 15, the oxide semiconductor layer 13, the back sheet coupling portion 14, the dye, the second base material 20, the cell sealing portion 30A, the insulating material 33, the electrolyte 40, the conductive materials 60P and 60Q, the back sheet 80, and the desiccant will be described in detail.

<First base material>

The first base material 15 is constituted by the conductive substrate, and has the transparent substrate 11, the transparent conductive layer 12, the insulating material 33 and the connecting terminal 16.

(Transparent substrate)

The material constituting the transparent substrate 11 may be any transparent material, for example, and examples of such a transparent material may include glass such as borosilicate glass, soda lime glass, glass which is made of soda lime and whose iron component is less than that of ordinary soda lime glass, and quartz glass, polyethylene terephthalate (PET), polyethylene naphthalate (PEN), polycarbonate (PC), and polyethersulfone (PES). The thickness of the transparent substrate 11 is appropriately determined depending on the size of the photoelectric conversion element 100 and is not particularly limited, but it may be set into the range of from 50 to 10000 $\mu$m, for example.

(Transparent conductive layer)

Examples of the material contained in the transparent conductive layer 12 may include a conductive metal oxide such as indium-tin-oxide (ITO), tin oxide ($SnO_2$), and fluorine-doped-tin-oxide (FTO). The transparent conductive layer 12 may be constituted by a single layer or a laminate consisting of a plurality of layers containing different conductive metal oxides. It is preferable that the transparent conductive layer 12 contain FTO since FTO exhibits high heat resistance and chemical resistance in a case in which the transparent conductive layer 12 is constituted by a single layer. The transparent conductive layer 12 may further contain a glass frit. The thickness of the transparent conductive layer 12 may be set into the range of from 0.01 to 2 $\mu$m, for example.

In addition, the resistance value of the connecting portion 12g of the transparent conductive layer 12D of the transparent conductive layer 12 is not particularly limited but is preferably equal to or less than the resistance value represented by the following Equation (1).

$$\texttt{Resistance value = number of photoelectric conversion cell}$$

$$\texttt{50 connected in series} \times 120 \ \Omega \qquad (1)$$

In this case, it is possible to sufficiently suppress the deterioration of the performance of the photoelectric conversion element 100 compared to a case in which the resistance value of the connecting portion 12g exceeds the resistance value represented by Equation (1) above. In the present embodiment, since the number of photoelectric conversion cells 50 is 4 and thus the resistance value represented by Equation (1) above becomes 480 $\Omega$, the resistance value of the connecting portion 12g is preferably 480 $\Omega$ or less.

(Insulating Material)

The thickness of the insulating material 33 is typically in a range of 10 to 30 $\mu$m, preferably in a range of 15 to 25 $\mu$m.

(Connecting terminal)

The connecting terminal 16 contains a metallic material. Examples of the metallic material may include silver, copper and indium. These may be used singly or in combination of two or more kinds thereof.

In addition, the connecting terminal 16 may be constituted by the same material as or a different material from the conductive material 60P but it is preferable to be constituted by the same material.

In this case, it is possible to more sufficiently improve the adhesive property of the connecting terminal 16 and the conductive material 60P since the connecting terminal 16 and the conductive material 60P are constituted by the same material. For this reason, it is possible to more improve the connection reliability of the photoelectric conversion element 100.

In the connecting terminal 16, the width of the conductive material non-connecting portion 16B is not particularly limited as long as it is narrower than the width of the conductive material connecting portion 16A, but it is preferable to be equal to or less than 1/2 of the width of the conductive material connecting portion 16A.

In this case, it is possible to more improve the connection reliability of the photoelectric conversion element 100 compared to a case in which the width of the conductive material non-connecting portion 16B exceeds 1/2 of the width of the conductive material connecting portion 16A.

The width of the conductive material connecting portion 16A is not particularly limited but is preferably from 0.5 to 5 mm and more preferably from 0.8 to 2 mm.

<Oxide semiconductor layer>

The oxide semiconductor layer 13 is constituted by oxide semiconductor particles. The oxide semiconductor particles are constituted by, for example, titanium oxide ($TiO_2$), silicon oxide ($SiO_2$), zinc oxide (ZnO), tungsten oxide ($WO_3$), niobium oxide ($Nb_2O_5$), strontium titanate ($SrTiO_3$), tin oxide ($SnO_2$), indium oxide ($In_3O_3$), zirconium oxide ($ZrO_2$), thallium oxide ($Ta_2O_5$), lanthanum oxide ($La_2O_3$), yttrium oxide ($Y_2O_3$), holmium oxide ($Ho_2O_3$), bismuth oxide ($Bi_2O_3$), cerium oxide ($CeO_2$), aluminum oxide ($Al_2O_3$), or two or more kinds of these.

The oxide semiconductor layer 13 is usually constituted by an absorbing layer for absorbing light, but may be constituted by an absorbing layer and a reflective layer which returns the light that is transmitted through the absorbing layer to the absorbing layer by reflecting the light.

The thickness of the oxide semiconductor layer 13 is typically in a range of 0.5 to 50 μm.

(Back sheet coupling portion)

The material constituting the back sheet coupling portion 14 is not particularly limited as long as it can make the back sheet 80 adhere to the transparent conductive layer 12, and it is possible to use, for example, a glass frit, a resin material which is the same as the resin material used for the sealing portion 31A, or the like as the material constituting the back sheet coupling portion 14. Among them, the back sheet coupling portion 14 is preferably a glass frit. It is possible to effectively suppress the penetration of moisture or the like from the outside of the back sheet 80 since the glass frit exhibits higher sealing ability than the resin material.

<Dye>

Examples of the dye include a photosensitizing dye such as a ruthenium complex having a ligand containing a bipyridine structure, a terpyridine structure, and the like; an organic dye such as porphyrin, eosin, rhodamine, and merocyanine; and an organic-inorganic composite dye such as a lead halide-based perovskite-type crystal. For example, $CH_3NH_3PbX_3$ (X = Cl, Br, I) is used as a lead halide-based perovskite. Among the examples, the photosensitizing dye which is constituted by the ruthenium complex having the ligand containing the terpyridine structure is preferable as the dye. In this case, it is possible to further improve the photoelectric conversion characteristic of the photoelectric conversion element 100. Meanwhile, when the dye is constituted by the photosensitizing dye, the photoelectric conversion element 100 is constituted by a dye-sensitized photoelectric conversion element, and the photoelectric conversion cell 50 is constituted by a dye-sensitized photoelectric conversion cell. Herein, examples of the dye-sensitized photoelectric conversion element include a dye-sensitized photoelectric conversion element in which power generation is performed by sunlight, that is, a dye-sensitized solar cell module (DSC module), and a dye-sensitized photoelectric conversion element in which power generation is performed by light other than sunlight such as indoor light. In addition, examples of the dye-sensitized photoelectric conversion cell include a dye-sensitized photoelectric conversion cell in which power generation is performed by sunlight, that is, a dye-sensitized solar cell (DSC), and a dye-sensitized photoelectric conversion cell in which power generation is performed by light other than sunlight such as indoor light.

(CSecond base material)

As described above, the second base material 20 comprises a conductive substrate 21 which is a second electrode and a conductive catalyst layer 22 which is provided on the first base material 15 side of the conductive substrate 21 and promotes the reduction reaction on the surface of the second base material 20.

The conductive substrate 21 is constituted by a metal substrate and the metal substrate is constituted by, for example, a corrosion-resistant metallic material such as titanium, nickel, platinum, molybdenum, tungsten, aluminum, or stainless steel. The thickness of the conductive substrate 21 is appropriately determined depending on the size of the photoelectric conversion element 100 and is not particularly limited, but it may be set to from 0.005 to 0.1 mm, for example.

The catalytic layer 22 is constituted by platinum, a carbon-based material, a conductive polymer, and the like. Herein, a carbon nanotube is preferably used as the carbon-based material.

<Sealing portion>

The cell sealing portion 30A is constituted by the first cell sealing portion 31A and the second cell sealing portion 32A.

Examples of the material constituting the first cell sealing portion 31A may include a resin such as a modified polyolefin resin including an ionomer, an ethylene-vinyl acetic anhydride copolymer, an ethylene-methacrylic acid copolymer, an ethylene-vinyl alcohol copolymer and the like, an ultraviolet-cured resin, and vinyl alcohol polymer.

In the first cell sealing portion 31A, a ratio ($t_1/t_2$) of the thickness $t_1$ of the outer sealing portion 31a to the thickness $t_2$ of the inner sealing portion 31b may be greater than 1. However, $t_1/t_2$ is preferably in a range of 1.1 to 2.0, and more preferably in a range of 1.1 to 1.5. If $t_1/t_2$ is in the range of 1.1 to 2.0, more excellent durability may be obtained when compared to a case in which $t_1/t_2$ is out of the range.

The thickness $t_2$ of the inner sealing portion 31b is normally in a range of 40 to 90 μm, and preferably in a range of 60 to 80 μm.

In addition, a height of the protrusion portion 31f of the sealing connection portion 31d from the main sealing connection body 31e is not particularly restricted. However, the height is preferably 5 to 100% of the thickness of the second base material 20, and more preferably 20 to 80% thereof. In this case, it is possible to effectively ensure an adhesive force between the sealing connection portion 31d and the first base material 15 or the second base material 20. For this reason, when the inner sealing portion 31b is connected to the sealing connection portion 31d, more excellent durability can be obtained. Further, even when the adjacent second base materials 20 attempt to come into contact with each other, the contact is effectively inhibited by the protrusion portion 31f of the sealing connection portion 31d. For this reason, it is possible to effectively prevent a short circuit between the second base materials 20.

The width $w_3$ of the inner sealing portion 31b is preferably 25% or more and less than 100% of the width $w_1$ of the outer sealing portion 31a. In this case, more excellent durability may be obtained when compared to a case in which the width $w_3$ of the inner sealing portion 31b is less than 25% of the width $w_1$ of the outer sealing portion 31a.

In the photoelectric conversion element 100, the width $w_1$ of the outer sealing portion 31a is preferably greater than 50% and less than 100% of the total width $w_2$, and more preferably 80% or more and less than 100% thereof. In this case, since the width $w_1$ of the outer sealing portion 31a is less than 100% of the total width $w_2$, an aperture ratio can be more improved when compared to a case in which the width $w_1$ of the outer sealing portion 31a is 100% or more of the total width $w_2$. On the other hand, the distance at which moisture or the like enters from the atmosphere up to the electrolyte 40 further increases when compared to a case in which the width $w_1$ of the outer sealing portion 31a is 50% or less of the total width $w_2$. For this reason, it is possible to more sufficiently inhibit moisture from entering from the outside through the inner sealing portion 31b and the sealing connection portion 31d present between the adjacent photoelectric conversion cells 50.

In this case, it is possible to balance a large aperture ratio and excellent durability.

Examples of the material constituting the second cell sealing portion 32A may include a resin such as a modified polyolefin resin including an ionomer, an ethylene-vinyl acetic anhydride copolymer, an ethylene-methacrylic acid copolymer, an ethylene-vinyl alcohol copolymer and the like, an ultraviolet-cured resin, and vinyl alcohol polymer in the same manner as the first cell sealing portion 31A.

The thickness of the second cell sealing portion 32A is usually from 20 to 45 μm and preferably from 30 to 40 μm.

(Electrolyte)

The electrolyte 40 contains, for example, a redox couple such as iodide ion/polyiodide ion (for example, $I^-/I_3^-$) and an organic solvent. It is possible to use acetonitrile, methoxy acetonitrile, methoxy propionitrile, propionitrile, ethylene carbonate, propylene carbonate, diethyl carbonate, γ-butyrolactone, valeronitrile, pivalonitrile, glutaronitrile, methacrylonitrile, isobutyronitrile, phenyl acetonitrile, acrylonitrile, succinonitrile, oxalonitrile, pentanenitrile, and adiponitrile as the organic solvent. Examples of the redox couple may include a redox couple such as bromine ion/bromide ion, a zinc complex, an iron complex, and a cobalt complex in addition to iodide ion/polyiodide ion (for example, $I^-/I_3^-$). In addition, the electrolyte 40 may use an ionic liquid instead of the organic solvent. As the ionic liquid, for example, an ordinary temperature molten salt which is a known iodine salt, such as a pyridinium salt, an imidazolium salt, and a triazolium salt, and which is in a molten state at around room temperature is used. As such an ordinary temperature molten salt, for example, 1-hexyl-3-methylimidazolium iodide, 1-ethyl-3-propylimidazolium iodide, dimethylimidazolium iodide, ethylmethylimidazolium iodide, dimethylpropylimidazolium iodide, butylmethylimidazolium iodide, or methylpropylimidazolium iodide is preferably used.

In addition, the electrolyte 40 may use a mixture of the ionic liquid above and the organic solvent above instead of the organic solvent above.

In addition, it is possible to add an additive to the electrolyte 40. Examples of the additive may include LiI, $I_2$, 4-t-butylpyridine, guanidinium thiocyanate, 1-methylbenzimidazole, and 1-butylbenzimidazole.

Moreover, as the electrolyte 40, a nanocomposite gel electrolyte which is a quasi-solid electrolyte obtained by kneading nanoparticles such as $SiO_2$, $TiO_2$, and carbon nanotubes with the electrolyte above into a gel-like form may be used, or an electrolyte gelled using an organic gelling agent such as polyvinylidene fluoride, a polyethylene oxide derivative, and an amino acid derivative may also be used.

The electrolyte 40 contains a redox couple including iodide ions/polyiodide ions (for example, $I^-/I_3^-$), and a concentration of the polyiodide ions (for example, $I_3^-$) is preferably 0.006 mol/L or less, more preferably in a range of 0 to $6\times10^{-6}$ mol/L, and even more preferably in a range of 0 to $6\times10^{-8}$ mol/L. In this case, since the concentration of the polyiodide ions (for example, $I_3^-$) which carry electrons is low, leakage current can be further reduced. For this reason, an open circuit voltage can be further increased, and thus the photoelectric conversion characteristic can be further improved.

<Conductive material>

As the conductive materials 60P and 60Q, for example, a metal film is used. It is possible to use, for example, silver or copper as the metallic material constituting the metal film.

<Back sheet>

As described above, the back sheet 80 includes the laminate 80A including a weather resistant layer and a metal layer and the adhesive portion 80B which is provided on the surface of the photoelectric conversion cell 50 side of the laminate 80A and adheres the laminate 80A and the back sheet coupling portion 14.

The weather resistant layer may be constituted by, for example, polyethylene terephthalate or polybutylene terephthalate.

The thickness of the weather resistant layer may be from 50 to 300 μm, for example.

The metal layer may be constituted by, for example, a metallic material containing aluminum. The metallic material is usually constituted by aluminum simple substance but may be an alloy of aluminum and other metals. Examples of the other metals may include copper, manganese, zinc, magnesium, lead, and bismuth. Specifically, a 1000 series aluminum is desirable in which other metals are added to pure aluminum of 98% or higher purity in a trace quantity. This is because this 1000 series aluminum is inexpensive and excellent in workability compared to other aluminum alloys.

The thickness of the metal layer is not particularly limited but may be from 12 to 30 μm, for example.

The laminate 80A may further include a resin layer. Examples of the material constituting the resin layer may include a butyl rubber, a nitrile rubber, and a thermoplastic resin. These can be used singly or in combination of two or more kinds thereof. The resin layer may be formed on the entire surface on the side opposite to the weather resistant layer of the metal layer or may be formed only on the peripheral portion thereof.

Examples of the material constituting the adhesive portion 80B may include a butyl rubber, a nitrile rubber, and a thermoplastic resin. These can be used singly or in combination of two or more kinds thereof. The thickness of the adhesive portion 80B is not particularly limited but may be from 300 to 1000 μm, for example.

<Desiccant>

The desiccant may be in a sheet shape or granular. The desiccant may be one which absorbs moisture, for example, and examples of the desiccant may include silica gel, alumina, and zeolite.

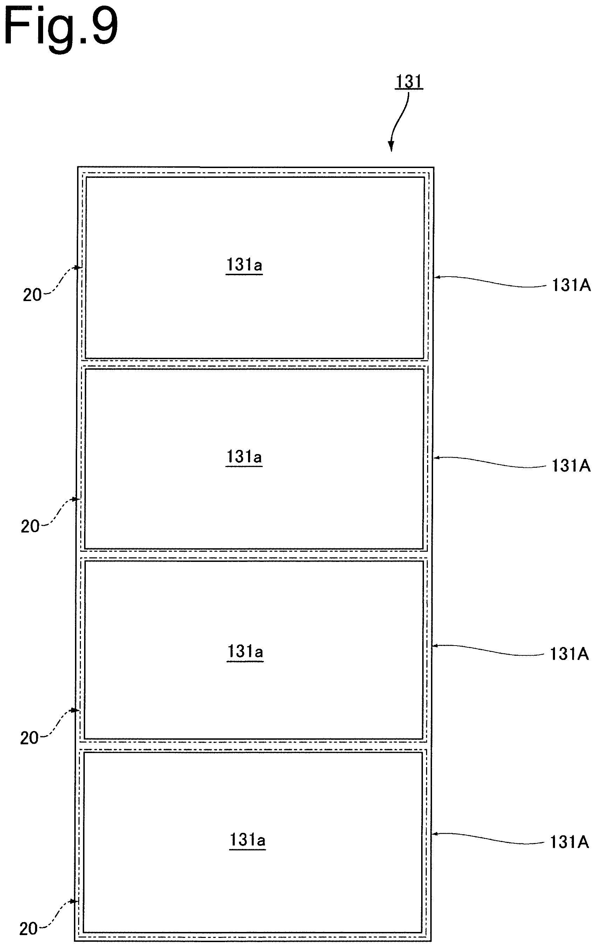

Next, the method of manufacturing the photoelectric conversion element 100 will be described with reference to Fig. 4, Fig. 8 and Fig. 9. Fig. 9 is a plan view illustrating a first sealing portion forming body for forming a first integrated sealing portion of Fig. 5.

First, one transparent substrate 11 is prepared.

Next, a laminate obtained by forming a transparent conductive layer on one transparent substrate 11 is prepared.

As the method of forming the transparent conductive layer, a sputtering method, a vapor deposition method, a spray pyrolysis deposition method (SPD), or a CVD method is used.

Next, as illustrated in Fig. 4, the groove 90 is formed with respect to the transparent conductive layer, and the transparent conductive layers 12A to 12F which are disposed in an insulated state to interpose the groove 90 between one another are formed. Specifically, the four transparent conductive layers 12A to 12D as the first electrodes corresponding to the photoelectric conversion cells 50A to 50D are formed so as to have the quadrangular-shaped main body portion 12a and the protruding portion 12c. At this time, the transparent conductive layers 12A to 12C corresponding to the photoelectric conversion cells 50A to 50C are formed such that the protruding portion 12c has not only the projecting portion 12d but also the facing portion 12e which extends from the projecting portion 12d and faces the main body portion 12a of the adjacent photoelectric conversion cell 50. In addition, the transparent conductive layer 12D is formed so as to have not only the quadrangular-shaped main body portion 12a and the projecting portion 12d but also the first current extracting portion 12f and the connecting portion 12g connecting the first current extracting portion 12f and the main body portion 12a. At this time, the first current extracting portion 12f is formed so as to be disposed on the side opposite to the transparent conductive layer 12B with respect to the transparent conductive layer 12A. Moreover, the transparent conductive layer 12E is formed so as to form the second current extracting portion 12h. At this time, the second current extracting portion 12h is formed so as to be disposed on the side opposite to the transparent conductive layer 12B with respect to the transparent conductive layer 12A and to be disposed next to the first current extracting portion 12f via the groove 90.

The groove 90 can be formed by, for example, a laser scribing method using a YAG laser, a $CO_2$ laser or the like as the light source. In this manner, the transparent conductive layer 12 is formed on the transparent substrate 11.

Next, precursors of the connecting terminal 16 constituted by the conductive material connecting portion 16A and the conductive material non-connecting portion 16B are formed on the protruding portions 12c of the transparent conductive layers 12A to 12C. Specifically, the precursor of the connecting terminal 16 is formed such that the conductive material connecting portion 16A is provided on the facing portion 12e. In addition, the precursor of the connecting terminal 16 is also formed on the transparent conductive layer 12E. In addition, the precursor of the conductive material non-connecting portion 16B is formed so as to be narrower than the width of the conductive material connecting portion 16A. The precursor of the connecting terminal 16 can be formed, for example, by coating and drying a silver paste.

Moreover, a precursor of the current collecting wiring 17 is formed on the connecting portion 12g of the transparent conductive layer 12D. The precursor of the current collecting wiring 17 can be formed, for example, by coating and drying a silver paste.

In addition, precursors of the external connecting terminals 18a and 18b for extracting the current to the outside are respectively formed on the first current extracting portion 12f and the second current extracting portion 12h of the transparent conductive layer 12D. The precursor of the external connecting terminal can be formed, for example, by coating and drying a silver paste.

Furthermore, a precursor of the insulating material 33 made of a glass frit is formed so as to enter into the first groove 90A formed along the edge portion of the main body portion 12a and to cover the edge portion of the main body portion 12a as well. The insulating material 33 can be formed, for example, by coating and drying a paste containing a glass frit.

In addition, in order to fix the back sheet 80, in the same manner as the insulating material 33, a precursor of the annular back sheet coupling portion 14 is formed so as to surround the insulating material 33 and to pass through the transparent conductive layer 12D, the transparent conductive layer 12E, and the transparent conductive layer 12F.

Furthermore, a precursor of the oxide semiconductor layer 13 is formed on the main body portion 12a of each of the transparent conductive layers 12A to 12D. The precursor of the oxide semiconductor layer 13 can be formed by printing and then drying a paste for porous oxide semiconductor layer formation containing oxide semiconductor particles.

The paste for oxide semiconductor layer formation contains a resin such as polyethylene glycol and a solvent such as terpineol in addition to the oxide semiconductor particles.

It is possible to use, for example, a screen printing method, a doctor blading method, or a bar coating method as the printing method of the paste for oxide semiconductor layer formation.

Finally, the precursor of the connecting terminal 16, the precursor of the insulating material 33, the precursor of the back sheet coupling portion 14, and the precursor of the oxide semiconductor layer 13 are collectively fired to form the connecting terminal 16, the insulating material 33, the back sheet coupling portion 14, and the oxide semiconductor layer 13.

At this time, the firing temperature varies depending on the kind of the oxide semiconductor particles or the glass frit but is usually from 350 to 600°C, and the firing time also varies depending on the kind of the oxide semiconductor particles or the glass frit but is usually from 1 to 5 hours.

In this manner, as illustrated in Fig. 8, the working electrode 10 having the first base material 15 is obtained on which the back sheet coupling portion 14 for fixing the back sheet 80 is formed.

Next, the dye is supported on the oxide semiconductor layer 13 of the working electrode 10. For this, the dye may be adsorbed on the oxide semiconductor layer 13 by immersing the working electrode 10 in a solution containing the dye, the extra dye is then washed out with the solvent component of the above solution, and drying is performed, thereby the dye may be adsorbed on the oxide semiconductor layer 13. However, it is also possible to support the dye on the oxide semiconductor layer 13 by coating a solution containing the dye on the oxide semiconductor layer 13 and then drying to adsorb the dye on the oxide semiconductor layer 13.

Next, the electrolyte 40 is disposed on the oxide semiconductor layer 13.

Next, as illustrated in Fig. 9, a first integrated sealing portion forming body 131 for forming the first sealing portion 31 is prepared. The first integrated sealing portion forming body 131 can be obtained by preparing one sheet of resin film for sealing composed of the material constituting the first sealing portion 31 and forming a quadrangular-shaped opening 131a in the resin film for sealing as many as the number of the photoelectric conversion cells 50. The first integrated sealing portion forming body 131 has a structure formed by integrating a plurality of first sealing portion forming bodies 131A.

Thereafter, this first sealing portion forming body 131 is adhered on the first base material 15. At this time, the first sealing portion forming body 131 is adhered to the first base material 15 so as to be superimposed on the insulating material 33 constituting the first base material 15. The adhesion of the first sealing portion forming body 131 to the first base material 15 can be performed by heating and melting the first sealing portion forming body 131. In addition, the first sealing portion forming body 131 is adhered to the first base material 15 such that the main body portion 12a of the transparent conductive layer 12 is disposed on the inner side of the first sealing portion forming body 131.

On the other hand, the second base materials 20 are prepared to have the same number as the number of the photoelectric conversion cells 50.

The second base material 20 can be obtained by forming the conductive catalyst layer 22 which promotes the reduction reaction on the surface of the second base material 20 on the conductive substrate 21 as the second electrode.

Next, one more piece of the first sealing portion forming body 131 described above is prepared. Thereafter, each of the plurality of the second base materials 20 is bonded so as to close each of the openings 131a of the first sealing portion forming body 131.

Subsequently, the first sealing portion forming body 131 adhered to the second base material 20 and the first sealing portion forming body 131 adhered to the first base material 15 are superposed, and heated and melted while being pressed. In this way, the first sealing portion 31 is formed between the first base material 15 and the second base material 20. At this time, the first sealing portion 31 is formed such that the thickness $t_1$ of the outer sealing portion 31a is larger than the thickness $t_2$ of the inner sealing portion 31b, and the maximum thickness $t_3$ of the sealing connection portion 31d is larger than the thickness $t_2$ of the inner sealing portion. In addition, in this instance, the first sealing portion 31 is formed such that the width $w_3$ of the inner sealing portion 31b is narrower than the width $w_1$ of the outer sealing portion 31a. Further, at this time, the first sealing portion 31 is formed such that the the width $w_1$ of the outer sealing portion 31a is narrower than the total width $w_2$. The thickness $t_1$ of the outer sealing portion 31a and the thickness $t_2$ of the inner sealing portion can be adjusted by providing an uneven portion on a surface of a heat cast which is used when the first sealing portion forming body 131 is pressed and heated, and making a difference in height or depth between a portion in which the outer sealing portion 31a is pressed and a portion in which the inner sealing portion 31b is pressed, thereby making a difference between the thickness $t_1$ of the outer sealing portion 31a and the thickness $t_2$ of the inner sealing portion 31b when the first sealing portion forming body 131 is pressed using the heat cast, or by heating and pressing the first sealing portion forming body by a sealing jig, in which a heater is buried, using an apparatus capable of controlling a temperature by a thermocouple when the first sealing portion forming body 131 is pressed and heated, and capable of adjusting a welding pressure through displacement control. In addition, the maximum thickness $t_3$ of the sealing connection portion 31d can be adjusted by adjusting a welding pressure when the first sealing portion forming body 131 is pressed and heated. Further, the width $w_1$ of the outer sealing portion 31a, the total width $w_2$, and the width $w_3$ of the inner sealing portion 31b can be adjusted by changing a pattern shape of the oxide semiconductor layer 13 (when $w_2$ and $w_1$ are desired to be changed), a pattern shape of the first sealing portion forming body 131, or a position or a dimension of the second base material 20. The first sealing portion 31 can be formed under the atmospheric pressure or under decompression. However, the first sealing portion 31 is preferably formed under decompression.

Next, the second sealing portion 32 is prepared (see Fig. 6). The second sealing portion 32 has a structure formed by integrating a plurality of the second cell sealing portions 32A. The second sealing portion 32 can be obtained by preparing one sheet of resin film for sealing and forming a quadrangular-shaped opening 32c in the resin film for sealing as many as the number of the photoelectric conversion cells 50. The second sealing portion 32 is bonded to the second base material 20 so as to sandwich the joint edge portion 20a of the second base material 20 together with the first sealing portion 31. The adhesion of the second sealing portion 32 to the second base material 20 can be performed by heating and melting the second integrated sealing portion 32.

Examples of the resin film for sealing include a resin such as a modified polyolefin resin including ionomer, an ethylene-vinyl acetate anhydride copolymer, an ethylene methacrylic acid copolymer, an ethylene-vinyl alcohol copolymer, and the like, an ultraviolet-cured resin, and a vinyl alcohol polymer. A constituent material of a resin film for sealing for forming the second sealing portion 32 may be the same as or different from a constituent material of a resin film for sealing for forming the first sealing portion 31. When the constituent material of the resin film for sealing for forming the second sealing portion 32 is different from the constituent material of the resin film for sealing for forming the first sealing portion 31, the constituent material of the resin film for sealing for forming the second sealing portion 32 preferably has a higher melting point than that of the constituent material of the resin film for sealing for forming the first sealing portion 31. In this case, since the second cell sealing portion 32A is harder than the first cell sealing portion 31A, it is possible to effectively prevent contact between the second base materials 20 of the photoelectric conversion cells 50 adjacent to each other. In addition, since the first cell sealing portion 31A is softer than the second cell sealing portion 32A, stress applied to the cell sealing portion 30A can be effectively mitigated.

Next, the bypass diodes 70A, 70B, and 70C are fixed to the partitioning portion 32b of the second sealing portion 32. In addition, the bypass diode 70D is fixed on the cell sealing portion 30A of the photoelectric conversion cell 50D as well.

Thereafter, the conductive material 60Q is fixed to the conductive substrate 21 of the second base material 20 of the photoelectric conversion cells 50B to 50D so as to pass through the bypass diodes 70A to 70D. Moreover, the conductive material 60P is formed such that each of the conductive materials 60Q between the bypass diodes 70A and 70B, between the bypass diodes 70B and 70C, and between the bypass diodes 70C and 70D is connected with the conductive material connecting portion 16A on the transparent conductive layer 12A, the conductive material connecting portion 16A on the transparent conductive layer 12B, and the conductive material connecting portion 16A on the transparent conductive layer 12C, respectively. In addition, the conductive material 60P is fixed to the conductive substrate 21 of the second base material 20 of the photoelectric conversion cell 50A so as to connect the conductive material connecting portion 16A on the transparent conductive layer 12E and the bypass diode 70A. Moreover, the transparent conductive layer 12D is connected with the bypass diode 70D by the conductive material 60P.

At this time, with regard to the conductive material 60P, a paste containing a metallic material constituting the conductive material 60P is prepared, and this paste is coated from the second base material 20 over the conductive material connecting portion 16A of the connecting terminal 16 of the adjacent photoelectric conversion cell 50 and cured. With regard to the conductive material 60Q, a paste containing a metallic material constituting the conductive material 60Q is prepared, and this paste is coated on each of the second base materials 20 so as to link the adjacent bypass diodes and cured. At this time, as the paste above, it is preferable to use a low-temperature curing type paste which is capable of being cured at a temperature of 90°C or less from the viewpoint of avoiding an adverse effect on the dye.

Finally, the back sheet 80 is prepared, and the peripheral portion 80a of the back sheet 80 is adhered to the back sheet coupling portion 14. At this time, the back sheet 80 is disposed such that the adhesive portion 80B of the back sheet 80 is spaced apart from the cell sealing portion 30A of the photoelectric conversion cell 50.

The photoelectric conversion element 100 is obtained in the manner described above.

Meanwhile, in the description above, a method to collectively fire the precursor of the connecting terminal 16, the precursor of the insulating material 33, the precursor of the back sheet coupling portion 14, and the precursor of the oxide semiconductor layer 13 is used in order to form the connecting terminal 16, the insulating material 33, the back sheet coupling portion 14, and the oxide semiconductor layer 13, but the connecting terminal 16, the insulating material 33, the back sheet coupling portion 14, and the oxide semiconductor layer 13 may be formed by separately firing each of the precursors.

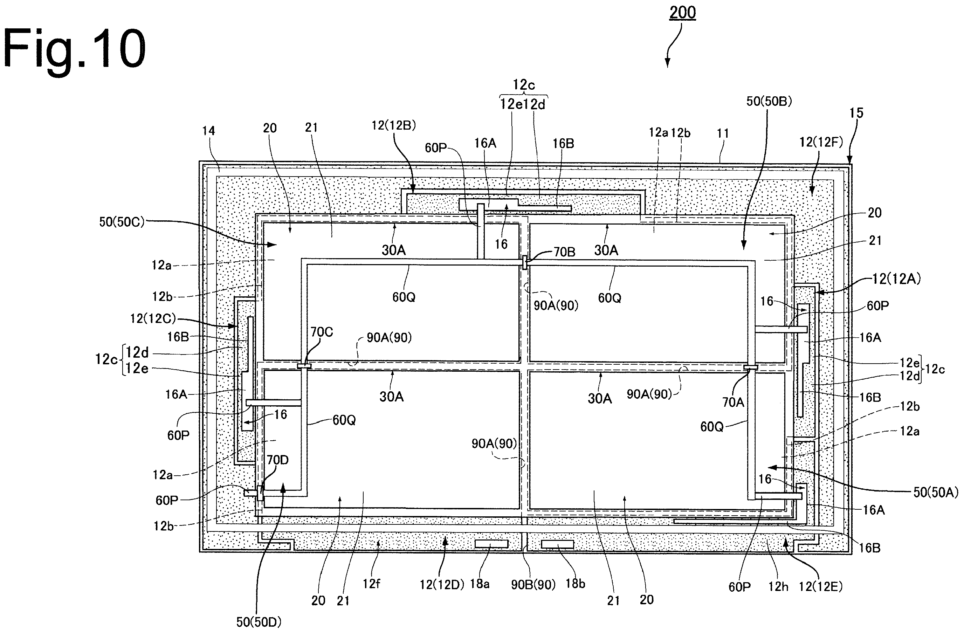

The invention is not limited to above-described embodiments. For example, in the above-described embodiment, the photoelectric conversion cells 50A to 50D are arranged in a row along the X direction of Fig. 2, but, like a photoelectric conversion element 200 illustrated in Fig. 10, photoelectric conversion cells 50C and 50D as portions of the photoelectric conversion cells 50A to 50D may be folded in the middle, and the photoelectric conversion cell 50A and the photoelectric conversion cell 50D may be arranged to be adjacent to each other. In this case, unlike the photoelectric conversion element 100, in the transparent conductive layer 12D, there is no need to provide the connecting portion 12g between the main body portion 12a and the first current extracting portion 12f.

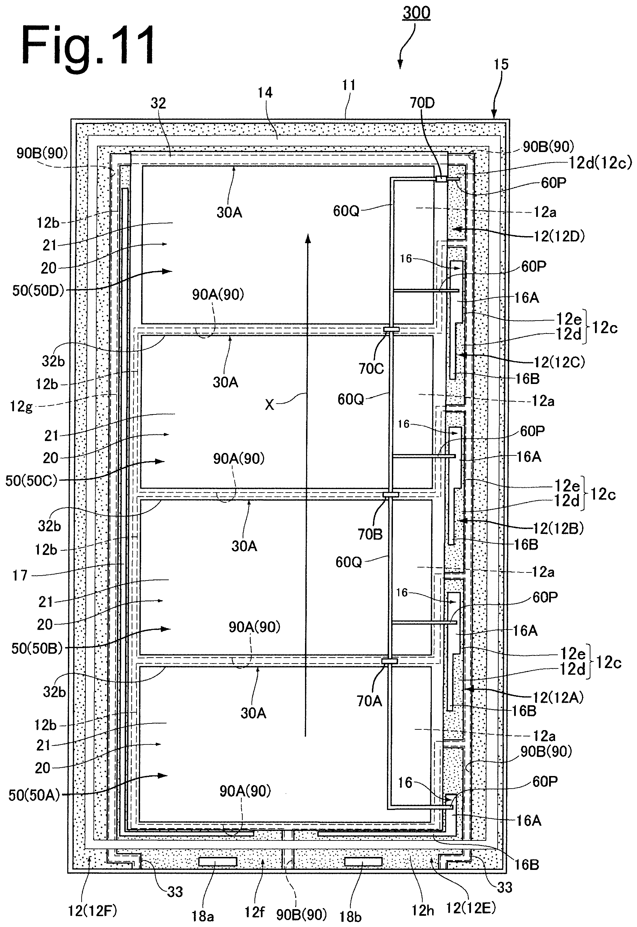

In addition, in the above embodiment, the second groove 90B which intersects the back sheet coupling portion 14 between the back sheet 80 and the first base material 15 is not covered with the insulating material 33 made of a glass frit. However, like the photoelectric conversion element 300 illustrated in Fig. 11, the second groove 90B is preferably covered with the insulating material 33 made of a glass frit. Meanwhile, in Fig. 11, the back sheet 80 is omitted. As illustrated in Fig. 11, when the second groove 90B intersects the back sheet coupling portion 14, moisture can be infiltrated through the second groove 90B into the space between the back sheet 80 and the first base material 15. In this case, since the insulating material 33 enters into the second groove 90B, and the insulating material 33 covers an edge portion of the portion of the transparent conductive layer 12 excluding the main body portion 12a, the infiltration of the moisture from the outer side of the back sheet 80 into the inner side is sufficiently suppressed. For this reason, the entrance of the moisture being infiltrated into the space between the back sheet 80 and the first base material 15 into the inner side of the cell sealing portion 30A through the cell sealing portion 30A is sufficiently suppressed. For this reason, a deterioration in durability of the photoelectric conversion element 300 can be sufficiently suppressed.

Furthermore, in the above embodiment, the first current extracting portion 12f and the second current extracting portion 12h are disposed in the vicinity on the photoelectric conversion cell 50A side, but the first current extracting portion 12f and the second current extracting portion 12h may be disposed in the vicinity on the photoelectric conversion cell 50D side as illustrated in a photoelectric conversion element 400 illustrated in Fig. 2. In this case, the first current extracting portion 12f is provided so as to protrude on the side opposite to the photoelectric conversion cell 50C with respect to the main body portion 12a of the transparent conductive layer 12D to the outer side of the cell sealing portion 30A. On the other hand, the second current extracting portion 12h is provided on the side opposite to the photoelectric conversion cell 50C with respect to the main body portion 12a of the transparent conductive layer 12D. In addition, the connecting portion 12i as a second connecting portion extends along the transparent conductive layers 12A to 12D, and this connecting portion 12i connects the second current extracting portion 12h and the conductive substrate 21 of the second base material 20 of the photoelectric conversion cell 50A. Specifically, a current collecting wiring 417 is provided on the connecting portion 12i along the connecting portion 12i, and this current collecting wiring 417 is connected with the conductive material 60P extending from the bypass diode 70A. It is possible to achieve space saving while exhibiting excellent photoelectric conversion characteristics by this photoelectric conversion element 400 as well. Meanwhile, in this case, it is the same as the above embodiment that it is preferable that the resistance value of the connecting portion 12i be equal to or less than the resistance value represented by the following Equation (1).

```
Resistance value = number of photoelectric conversion cell 50 connected in series × 120 Ω      (1)
```

In addition, in the above embodiment, the groove 90 has the second groove 90B, but the second groove 90B may not be necessarily formed.

In addition, in the above embodiment, the widths of the conductive material connecting portion 16A and the conductive material non-connecting portion 16B of the connecting terminal 16 are set to be constant, but each of the widths of the conductive material connecting portion 16A and the conductive material non-connecting portion 16B may change along the extending direction of the connecting terminal 16. For example, the width may monotonically increase from the end portion on the farthest side from the conductive material connecting portion 16A of the conductive material non-connecting portion 16B toward the end portion on the closest side thereof, and the width may monotonically increase from the end portion of the conductive material non-connecting portion 16B side of the conductive material connecting portion 16A toward the end portion on the farthest side from the conductive material non-connecting portion 16B.

In addition, in the above embodiment, the conductive material connecting portion 16A and the conductive material non-connecting portion 16B are provided along the cell sealing portion 30A, respectively, but these may be formed so as to extend in the direction away from the cell sealing portion 30A. However, in this case, it is preferable that the conductive material connecting portion 16A be disposed at the position closer to the cell sealing portion 30A than the conductive material non-connecting portion 16B. In this case, it is possible to more shorten the conductive material 60P.

Alternatively, in the connecting terminal 16 formed on the transparent conductive layers 12A to 12C, the extending direction of the conductive material non-connecting portion 16B may be disposed so as to be orthogonal to the extending direction of the conductive material connecting portion 16A.

In addition, the width of the conductive material connecting portion 16A is equal to or less than the width of the conductive material non-connecting portion 16B.

In addition, in the above-described embodiments, the above photoelectric conversion element has the connecting terminal 16. However, the above photoelectric conversion element may not include the connecting terminal 16.

In addition, in the above embodiment, the second cell sealing portion 32A is adhered to the first cell sealing portion 31A, but the second cell sealing portion 32A may not be adhered to the first cell sealing portion 31A.

Furthermore, in the above embodiment, the cell sealing portion 30A is constituted by the first sealing portion 31A and the second sealing portion 32A, but the second sealing portion 32A may be omitted.

Further, while the width $w_1$ of the outer sealing portion 31a is narrower than the total width $w_2$ in the above embodiment, the width $w_1$ of the outer sealing portion 31a may be greater than or equal to the total width $w_2$.

Furthermore, while the maximum thickness $t_3$ of the sealing connection portion 31d is larger than the thickness $t_2$ of the inner sealing portion in the above embodiment, the maximum thickness $t_3$ of the sealing connection portion 31d may be less than or equal to the thickness $t_2$ of the inner sealing portion.

In addition, in the above embodiment, the back sheet 80 is adhered to the transparent conductive layer 12 via the back sheet coupling portion 14 made of a glass frit, but the back sheet 80 is not required to be necessarily adhered to the transparent conductive layer 12 via the back sheet coupling portion 14.

Furthermore, in the above embodiment, the back sheet coupling portion 14 is spaced apart from the insulating material 33, but it is preferable that both of these be constituted by a glass frit and integrated. In this case, the interface between the back sheet coupling portion 14 and the transparent first base material 15 and the interface between the cell sealing portion 30A and the first base material 15 are not present even if moisture penetrates into the space between the back sheet 80 and the first base material 15. In addition, both of the insulating material 33 and the back sheet coupling portion 14 are composed of a glass frit and thus have a higher sealing ability compared to a resin. For this reason, it is possible to sufficiently suppress the penetration of moisture through the interface between the back sheet coupling portion 14 and the first base material 15 and the interface between the insulating material 33 and the first base material 15.

In addition, in the above embodiment, the insulating material 33 is composed of a glass frit, but the material constituting the insulating material 33 may be one having a higher melting point than the material constituting the first cell sealing portion 30A. For this reason, examples of such a material may include a thermosetting resin such as a polyimide resin and a thermoplastic resin in addition to a glass frit. Among them, it is preferable to use a thermosetting resin. In this case, even if the cell sealing portion 30A exhibits fluidity at a high temperature, the insulating material 33 is less likely to be fluidized even at a high temperature compared to the case of being composed of a thermoplastic resin in the same manner as the case of being composed of a glass frit. For this reason, the contact of the first base material 15 and the second base material 20 can be sufficiently suppressed, and thus the short circuit between the first base material 15 and the second base material 20 can be sufficiently suppressed.

In addition, in the above-described embodiments, the first base material 15 has the insulating material 33. However, the first base material 15 may not have the insulating material 33. In this case, the cell sealing portion 30A and the first sealing portion 31A are bonded to the transparent substrate 11 and the transparent conductive layer 12.

In addition, in the above-described embodiments, the first base material 15 has the connecting terminal 16. However, the first base material 15 may not include the connecting terminal 16.

In addition, in the above-deescribed embodiments, the above photoelectric conversion element has the outer connecting terminals 18a, 18b, but, may not have the outer connecting terminals 18a, 18b.

Moreover, in the above embodiment, the plurality of photoelectric conversion cells 50 are connected in series but may be connected in parallel.

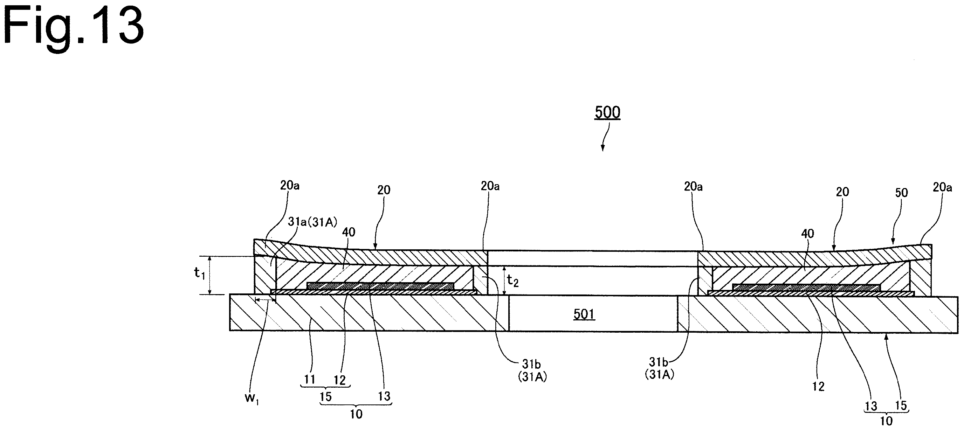

Further, while the plurality of photoelectric conversion cells 50 is used in the above embodiment, only one DSC may be used as in a photoelectric conversion element 500 illustrated in Fig. 13 in the invention. In this case, an annular inner sealing portion 31b is provided inside an annular outer sealing portion 31a while being separated from the outer sealing portion 31a, and one cell space is formed by the outer sealing portion 31a and the inner sealing portion 31b, thereby forming a first sealing portion. Herein, similarly to the above embodiment, a thickness $t_1$ of the outer sealing portion 31a is larger than a thickness $t_2$ of the inner sealing portion. In addition, a transparent substrate 11 has an annular shape, and an opening 501 is formed inside the transparent substrate 11. Further, in the photoelectric conversion element 500, a transparent conductive layer 12, an oxide semiconductor layer 13, and a second base material 20 are provided in annular shapes. For example, the photoelectric conversion element 500 may be disposed with respect to a frame body of a display device such that a display unit is viewed through the opening 501 while the second base material 20 turns towards the frame body side. The opening 501 may not be necessarily required and may be omitted. In this case, a back seat 80 may be provided to cover a photoelectric conversion cell 50.

In addition, in the above-described embodiments, the number of photoelectric conversion cells 50 is four. However, the number of photoelectric conversion cells may be one or more, and it is not limited to four. In this manner, in a case where a plurality of the photoelectric conversion cells 50 are included, it is preferable that the photoelectric conversion cells 50 be arrayed in a fixed direction as illustrated in Fig. 2 in comparison with a case where portions of the photoelectric conversion cells 50A to 50D are folded back in the middle thereof as illustrated in Fig. 10. In this manner, in a case where the photoelectric conversion cells 50 are arrayed in a fixed direction, it is possible to select both an even number and an odd number as the number of the photoelectric conversion cell 50 and thus it is possible to freely determine the number of the photoelectric conversion cell 50, and it is possible to improve the degree of freedom of the design as a result.

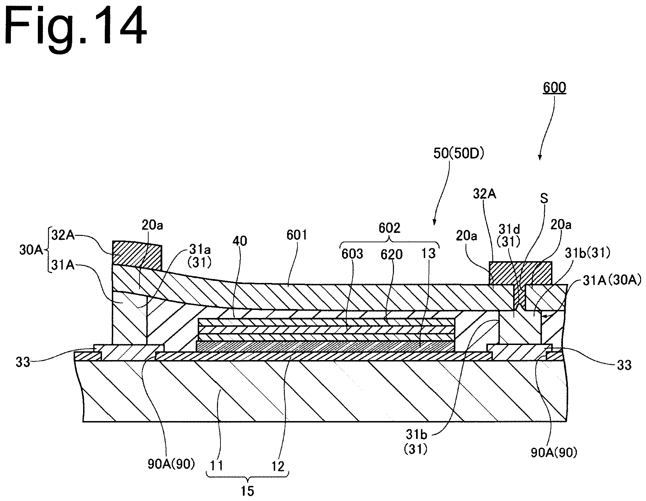

Furthermore, in the above embodiment, like a photoelectric conversion element 600 illustrated in Fig. 14, as the second base ,material, an insulating substrate 601 may be used. In this case, a structure 602 is disposed in a space between the insulating substrate 601 and the sealing portion 31A. The structure 602 is constituted by the oxide semiconductor layer 13, a porous insulating layer 603, and a counter electrode 620 in order from the first base material 15 side. In addition, the electrolyte 40 is disposed in the above space. The electrolyte 40 is impregnated into even the insides of the oxide semiconductor layer 13 and the porous insulating layer 603. Here, for example, a glass substrate or a resin film can be used as the insulating substrate 601. In addition, it is possible to use, as the counter electrode 620, a counter electrode which is the same as the second base material 20. Alternatively, the counter electrode 620 may be constituted by, for example, a porous single layer containing carbon or the like. The porous insulating layer 603 is used mainly to prevent the physical contact of the oxide semiconductor layer 13 and the counter electrode 620 and to impregnate the electrolyte 40 into the inside. As such a porous insulating layer 603, for example, a fired body of an oxide can be used. Meanwhile, in the photoelectric conversion element 600 illustrated in Fig. 14, only one structure 602 is provided in the space formed by the sealing portion 31A, the first base material 15 and the insulating substrate 601, but a plurality of structures 602 may be provided. In addition, the porous insulating layer 603 is provided between the oxide semiconductor layer 13 and the counter electrode 620, but may be provided between the first base material 15 and the counter electrode 620 so as to surround the oxide semiconductor layer 13. With this configuration, it is also possible to prevent the physical contact of the oxide semiconductor layer 13 and the counter electrode 620.

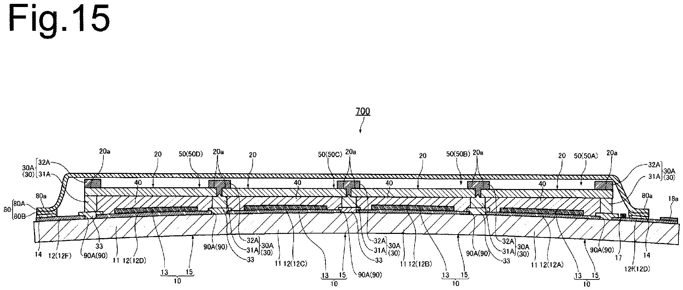

Furthermore, in the above embodiment, the whole transparent substrate 11 may be curved to be convex toward the second base material 20 side as in a photoelectric conversion element 700 illustrated in Fig. 15. In other words, a surface of the transparent substrate 11 on which the transparent conductive layer 12 is provided may be set to a convex surface, and a surface of the transparent substrate 11 on the opposite side from the transparent conductive layer 12 may be set to a concave surface. In this case, light having a large incident angle may be concentrated by refraction of incident light when compared to a case in which the whole transparent substrate 11 is not convex toward the second base material 20 side. In addition, in the heat cast used when the first sealing portion forming body 131 is pressed and heated, the thickness $t_1$ of the outer sealing portion 31a and the thickness $t_2$ of the inner sealing portion can be easily achived to satisfy the following equation:

$$t_1 > t_2$$

only by setting a pressing face as a flat surface without providing an uneven portion, and pressing and pressing the first sealing portion forming body 131 using the heat cast. Further, excellent durability may be obtained by the photoelectric conversion element 700 as well.

In addition, while the photoelectric conversion element has the back seat 80 in the above embodiment, the photoelectric conversion element may not have the back seat 80.

Further, while the photoelectric conversion element has the bypass diodes 70A to 70D in the above embodiment, the photoelectric conversion element may not have the bypass diodes 70A to 70D. In this case, the conductive material 60Q is unnecessary.

Furthermore, while the oxide semiconductor layer 13 is provided on the first base material 15 in the above embodiment, the oxide semiconductor layer 13 may be provided on the second base material 20. However, in this case, the second base material 20 does not have the catalytic layer 22, and the first base material 15 has the catalytic layer 22.

Moreover, while the conductive substrate 21 of the second base material 20 is constituted by the metal substrate in the above embodiment, the conductive substrate 21 may be constituted by a conductive substrate containing a nonmetallic material such as carbon. In addition, the conductive substrate 21 may be constituted by a stacked body in which the substrate and the second electrode are divided and a film made of a conductive oxide such as ITO and FTO is formed as the second electrode on the above-described transparent substrate 11. Further, when the conductive substrate 21 has a catalytic function (for example, when carbon and the like are contained), the second base material 20 may not have the catalytic layer 22. Example

Hereinafter, the content of the invention will be described more specifically with reference to Examples, but the invention is not limited to the following Examples.

(Example 1)

First, one transparent substrate which is composed of glass and has a dimension of 1 mm x 5 cm x 10 cm was prepared. Next, a laminate obtained by forming a transparent conductive layer composed of FTO having a thickness of 1 $\mu$m on this transparent substrate. Next, as illustrated in Fig. 4, the groove 90 was formed on the transparent conductive layer 12 by a $CO_2$ laser (V-460 manufactured by Universal Laser Systems Inc.), and the transparent conductive layers 12A to 12F were formed. At this time, the width of the groove 90 was set to 1 mm. In addition, each of the transparent conductive layers 12A to 12C was formed so as to have the main body portion having a quadrangular shape of 4.6 cm x 2.0 cm and the protruding portion protruding from the side edge portion of one side of the main body portion. In addition, the transparent conductive layer 12D was formed so as to have the main body portion having a quadrangular shape of 4.6 cm x 2.1 cm and the protruding portion protruding from the side edge portion of one side of the main body portion. In addition, the protruding portion 12c of the three transparent conductive layers 12A to 12C among the transparent conductive layers 12A to 12D was constituted by the projecting portion 12d projecting from the one side edge portion 12b of the main body portion 12a and the facing portion 12e which is extended from the projecting portion 12d and faced the main body portion 12a of the adjacent transparent conductive layer 12. In addition, the protruding portion 12c of the transparent conductive layer 12D was constituted only by the projecting portion 12d projecting from the one side edge portion 12b of the main body portion 12a. At this time, the length of the projecting direction (the direction orthogonal to the X direction in Fig. 2) of the projecting portion 12d was set to 2.1 mm and the width of the projecting portion 12d was set to 9.8 mm. In addition, the width of the facing portion 12e was set to 2.1 mm and the length of the facing portion 12e in the extending direction was set to 9.8 mm.

In addition, the transparent conductive layer 12D was formed so as to have not only the main body portion 12a and the protruding portion 12c but also the first current extracting portion 12f and the connecting portion 12g connecting the first current extracting portion 12f and the main body portion 12a. The transparent conductive layer 12E was formed so as to have the second current extracting portion 12h. At this time, the width of the connecting portion 12g was set to 1.3 mm and the length thereof was set to 59 mm. In addition, when the resistance value of the connecting portion 12g was measured by the four probe method, it was 100 $\Omega$. In this manner, the conductive substrate was obtained.

Next, a precursor of the connecting terminal 16 constituted by the conductive material connecting portion 16A and the conductive material non-connecting portion 16B was formed on the protruding portion 12c of the transparent conductive layers 12A to 12C. Specifically, the precursor of the connecting terminal 16 was formed such that a precursor of the conductive material connecting portion 16A was provided on the facing portion 12e and a precursor of the conductive material non-connecting portion 16B was provided on the projecting portion 12d. At this time, the precursor of the conductive material non-connecting portion 16B was formed so as to be narrower than the width of the conductive material connecting portion 16A. The precursor of the connecting terminal 16 was formed by applying the silver paste ("GL-6000X16" manufactured by FUKUDA METAL FOIL & POWDER Co., LTD.) by screen printing and drying it.

Furthermore, a precursor of the current collecting wiring 17 was formed on the connecting portion 12g of the transparent conductive layer 12D. The precursor of the current collecting wiring 17 was formed by applying the silver paste by screen printing and drying it.

In addition, precursors of the external connecting terminals 18a and 18b for extracting the current to the outside were formed on the first current extracting portion 12f of the transparent conductive layer 12A and the second current extracting portion 12h, respectively. The precursors of the external connecting terminals were formed by applying the silver paste by screen printing and drying it.

Moreover, a precursor of the insulating material 33 composed of a glass frit was formed so as to enters into the first groove 90A and to cover the edge portion of the main body portion 12a forming the first groove 90A. The insulating material 33 was formed by applying a paste containing a glass frit by screen printing and drying it. At this time, the edge portion of the transparent conductive layer covered with the insulating material 33 was the part between the groove 90 and the position 0.2 mm away from the groove 90.

In addition, in order to fix the back sheet 80, in the same manner as the insulating material 33, a precursor of the annular back sheet coupling portion 14 composed of a glass frit was formed so as to surround the insulating material 33 and to pass through the transparent conductive layer 12D, the transparent conductive layer 12E, and the transparent conductive layer 12F. In addition, at this time, the precursor of the back sheet coupling portion 14 was formed such that the precursor of the current collecting wiring 17 was disposed on the inner side thereof. In addition, the back sheet coupling portion 14 was formed such that the first current extracting portion and the second current extracting portion were disposed on the outer side thereof. The back sheet coupling portion 14 was formed by applying a paste containing a glass frit by screen printing and drying it.

Furthermore, a precursor of the oxide semiconductor layer 13 was formed on each of the main body portions 12a of the transparent conductive layers 12A to 12D. The precursor of the oxide semiconductor layer 13 was formed by applying a porous oxide semiconductor layer forming paste containing titania ("PST-21NR" manufactured by JGC Catalysts and Chemicals Ltd.) three times by screen printing and then drying the paste, and then by applying a porous oxide semiconductor layer forming paste containing titania ("PST-400C" manufactured by JGC Catalysts and Chemicals Ltd.) by screen printing and then drying the paste.

Next, the precursor of the connecting terminal 16, the precursor of the current collecting wiring 17, the precursors of the external connecting terminals 18a and 18b, the precursor of the insulating material 33, the precursor of the back sheet coupling portion 14, the precursor of the insulating material 33, and the precursor of the oxide semiconductor layer 13 were fired at 500°C for 15 minutes to form the connecting terminal 16, the current collecting wiring 17, the external connecting terminals 18a and 18b, the back sheet coupling portion 14, the insulating material 33, and the oxide semiconductor layer 13. In this manner, the working electrode 10 which has the first base material 15 and on which the back sheet coupling portion 14 is formed was obtained. At this time, the width of the conductive material connecting portion of the connecting terminal 16 was 1.0 mm and the width of the conductive material non-connecting portion thereof was 0.3 mm. In addition, the length along the extending direction of the conductive material connecting portion was 7.0 mm and the length along the extending direction of the conductive material non-connecting portion was 7.0 mm. In addition, the dimensions of the current collecting wiring 17, the external connecting terminals 18a and 18b, the back sheet coupling portion 14, and the oxide semiconductor layer 13 were as follows, respectively.

Current collecting wiring 17: 4 $\mu$m in thickness, 200 $\mu$m in width, 79 mm in length along the X direction in Fig. 2, and 21 mm in length along the direction orthogonal to the X direction in Fig. 2,

External connecting terminals 18a and 18b: 20 $\mu$m in thickness, 2 mm in width, and 7 mm in length,

Back sheet coupling portion 14: 50 $\mu$m in thickness, 3 mm in width, and

Oxide semiconductor layer 13: 14 $\mu$m in thickness, 17 mm in length in the X direction in Fig. 2, and 42.1 mm in length in the direction orthogonal to the X direction in Fig. 2

Next, the working electrode was immersed for 12 hours in a dye solution which contains 0.2 mM of a photosensitizing dye composed of Z907 and uses a mixed solvent obtained by mixing acetonitrile and tert-butanol at a volume ratio of 1 : 1 as a solvent, and then taken out therefrom and dried, and thus the photosensitizing dye was supported on the oxide semiconductor layer.

Next, iodine ($I_2$), 1,2-dimethyl-n-propylimidazolium iodide (DMPImI), and guanidinium thiocyanate (GuSCN) were added into a solvent composed of 3-methoxypropionitrile (MPN) such that concentrations thereof became 0.002 M, 0.1 M, and 0.6 M, respectively, and the mixture was dissolved under stirring. Thus, an electrolyte was obtained. Then, this electrolyte was applied onto the oxide semiconductor layer and dried, and thereby the electrolyte was disposed. At this time, the amount of the applied electrolyte was set to 31 $\mu$L per one DSC.

Next, the first integrated sealing portion forming body for forming the first sealing portion was prepared. The first integrated sealing portion forming body was obtained by preparing one sheet of resin film for sealing which had 8.0 cm × 4.6 cm × 50 $\mu$m and was composed of a maleic anhydride-modified polyethylene (product name: Bynel produced by DuPont) and forming four quadrangular-shaped openings in the resin film for sealing. At this time, the first integrated sealing portion forming body was fabricated such that each opening had a size of 1.7 cm × 4.4 cm × 50 $\mu$m, the width of the annular portion was 2 mm, and the width of the partitioning portion partitioning the inner side opening of the annular portion was 2.6 mm.

Thereafter, the first integrated sealing portion forming body was superimposed on the insulating material 33 constituting the first base material 15 and then was adhered to the insulating material 33 by heating and melting the first sealing portion forming body.

Next, four sheets of the counter electrodes were prepared. Two counter electrodes of the four sheets of the counter electrodes were prepared by forming the catalyst layer which had a thickness of 5 nm and was composed of platinum on the titanium foil of 4.6 cm × 1.9 cm × 40 $\mu$m by the sputtering method. The rest two counter electrodes of the four sheets of the counter electrodes were prepared by forming the catalyst layer which had a thickness of 5 nm and was composed of platinum on the titanium foil of 4.6 cm × 2.0 cm × 40 $\mu$m by the sputtering method. In addition, another first sealing portion forming body was prepared and this first sealing portion forming body was adhered to the surface facing the working electrode of the counter electrode in the same manner as above.

Then, the first sealing portion forming body adhered to the working electrode and the first sealing portion forming body adhered to the counter electrode were arranged to face each other, and the first sealing portion forming bodies were superposed. Then, in this state, the first sealing portion forming bodies were heated and melted while being pressed. In this way, the first sealing portion was formed between the working electrode and the counter electrode. At this time, heating and pressing were performed by heating and pressing the first sealing portion forming bodies by a sealing jig, in which a heater is buried, using an apparatus capable of controlling a temperature by a thermocouple, and capable of adjusting a welding pressure through displacement control. In addition, the thickness $t_1$ of the outer sealing portion, the thickness $t_2$ of the inner sealing portion, the maximum thickness $t_3$ of the sealing connection portion, the width $w_1$ of the outer sealing portion, the total width $w_2$, and the width $w_3$ of the inner sealing portion were set as below.

$t_1 = 50\ \mu m$
$t_2 = 43\ \mu m$
$t_3 = 71\ \mu m$
$w_1 = 2\ mm$
$w_2 = 2.6\ mm$
$w_3 = 1\ mm$

Next, the second sealing portion was prepared. The second sealing portion was obtained by preparing one sheet of resin film for sealing which had 8.0 cm x 4.6 cm x 50 $\mu m$ and was composed of maleic anhydride modified polyethylene (trade name: Bynel, manufactured by Du Pont) and forming four quadrangular-shaped openings in the resin film for sealing. At this time, the second sealing portion was fabricated such that each opening had a size of 1.7 cm $\times$ 4.4 cm $\times$ 50 $\mu m$, the width of the annular portion was 2 mm, and the width of the partitioning portion partitioning the inner opening of the annular portion was 2.6 mm. The second sealing portion was bonded to the counter electrode so as to sandwich the edge portion of the counter electrode together with the first sealing portion. At this time, the second sealing portion was bonded to the counter electrode and the first sealing portion by heating and melting the first sealing portion and the second sealing portion while pressing the second sealing portion to the counter electrode.

Next, the desiccant sheet was bonded on the metal substrate of each counter electrode with a double-sided tape. The dimensions of the desiccant sheet were 1 mm in thickness $\times$ 3 cm in length $\times$ 1 cm in width, and Zeosheet (trade name, manufactured by Shinagawa Chemicals Co., Ltd.) was used as the desiccant sheet.

Next, as illustrated in Fig. 2, the bypass diodes 70A to 70C were respectively fixed to the three partitioning portions of the second sealing portion by applying the low-temperature curing type silver paste (Dotite D500 manufactured by FUJIKURAKASEI CO., LTD.) so as to continue from the terminals at both ends of the bypass diode to the conductive substrate 21 of the second base material 20. In addition, the bypass diode 70D was fixed on the annular portion of the second integrated sealing portion of the photoelectric conversion cell 50D among the four photoelectric conversion cells 50A to 50D by applying the above low-temperature curing type silver paste so as to continue from one terminal of the terminals at both ends of the diode to the counter electrode. In this manner, the conductive material 60Q was formed so as to link the two adjacent bypass diodes with respect to the four bypass diodes 70A to 70D. At this time, the conductive material 60Q was formed by curing the above low-temperature curing type silver paste at 30°C for 12 hours. RB751V-40 manufactured by ROHM was used as the bypass diode.

In addition, the conductive material 60P was formed by applying the low-temperature curing type silver paste (Dotite D-500 manufactured by FUJIKURAKASEI CO., LTD.) and curing it so as to connect each of the conductive materials 60Q between the bypass diodes and the conductive material connecting portion on the three transparent conductive layers 12A to 12C, respectively. Moreover, for the bypass diode 70A, the conductive material 60P was formed by applying the above low-temperature curing type silver paste and curing it so as to be connected with the conductive material connecting portion on the transparent conductive layer 12E. At this time, the conductive material 60P was formed by curing the above low-temperature curing type silver paste at 30°C for 12 hours.

Finally, the butyl rubber ("Aikameruto" manufactured by Aica Kogyo Co., Ltd.) was coated on the back sheet coupling portion 14 with a dispenser while being heated at 200°C to form a precursor of the adhesive portion. On the other hand, a laminate, which is obtained by laminating a polybutylene terephthalate (PBT) resin film (50 $\mu m$ in thickness), aluminum foil (25 $\mu m$ in thickness), and a film (50 $\mu m$ in thickness) composed of Bynel (trade name, manufactured by Du Pont) in this order, was prepared. Thereafter, the peripheral portion of this laminate 80A was superimposed on the precursor of the adhesive portion 80B, and a pressure was applied thereto for 10 seconds. In this manner, the back sheet 80 constituted by the adhesive portion 80B and the laminate 80A was obtained on the back sheet coupling portion 14. Thus, the photoelectric conversion element constituted by the DSC module was obtained.

(Examples 2 to 4 and Comparative Examples 1 and 2)

A photoelectric conversion element constituted by a DSC module was manufactured similarly to Example 1 except that the thickness $t_1$ of the outer sealing portion, the thickness $t_2$ of the inner sealing portion, the maximum thickness $t_3$ of the sealing connection portion, the width $w_1$ of the outer sealing portion, the total width $w_2$, and the width $w_3$ of the inner sealing portion were set as shown in Table 1.

(Characteristic evaluation)

(Evaluation of photoelectric conversion characteristics)

Photoelectric conversion elements obtained in Examples 1 to 4 and Comparative Examples 1 and 2 were disposed on a flat surface, and all the photoelectric conversion elements were uniformly irradiated with white light having an illuminance of 200 lux from a light source. Photoelectric conversion efficiencies obtained at this time were measured as initial photoelectric conversion efficiencies $\eta_0$(%). At this time, a white LED (Product name: LEL-SL5N-F, manufactured by Toshiba Lighting and Technology Co., Ltd.) was used as the light surface. The illuminance was measured using an illuminometer (AS ONE LM-331, manufactured by AS ONE Corporation). Results are shown in Table 1.

(Durability evaluation)

After the photoelectric conversion elements obtained in Examples 1 to 4 and Comparative Examples 1 and 2 used for the evaluation of photoelectric conversion characteristics were held in a thermostat at 85°C for 1,000 hours, photoelectric conversion efficiencies $\eta$(%) were measured similarly to the above description. Then, $\eta/\eta_0$ were calculated. Results are shown in Table 1.

(Aperture ratio)

With regard to the photoelectric conversion elements obtained in Examples 1 to 4 and Comparative Examples 1 and 2, aperture ratios were calculated as below. That is, the photoelectric conversion elements were photographed from the transparent substrate side, each of an area A1 surrounded by an outer circumferential edge of the outer sealing portion and an area A2 of a power generation portion (an area of the dye-supported oxide semiconductor layer) was calculated in obtained pictures, and a ratio of A2 to A1 was calculated in a percentage (%). Results are shown in Table 1.

[Table 1]

| | $t_1$ ($\mu$m) | $t_2$ ($\mu$m) | $t_3$ ($\mu$m) | $w_1$ (mm) | $w_2$ (mm) | $w_3$ (mm) | Photoelectric conversion characteristic $\eta_0$ (%) | Durability $\eta/\eta_0$ | Aperture ratio (%) |
|---|---|---|---|---|---|---|---|---|---|
| Example 1 | 50 | 43 | 71 | 1 | 2 | 2.5 | 11.49 | 0.924 | 78.3 |
| Example 2 | 58 | 43 | 71 | 1 | 2 | 2.5 | 11.47 | 0.935 | 78.3 |
| Example 3 | 50 | 43 | 71 | 2 | 2 | 4.1 | 11.53 | 0.941 | 73.8 |
| Example 4 | 50 | 43 | 43 | 1 | 2 | 2.5 | 11.57 | 0.927 | 78.3 |
| Comparative Example 1 | 43 | 43 | 43 | 1 | 2 | 2.5 | 11.92 | 0.889 | 78.3 |
| Comparative Example 2 | 43 | 50 | 71 | 1 | 2 | 2.5 | 11.53 | 0.854 | 78.3 |

As shown in Table 1, each of the photoelectric conversion elements of Examples 1 to 4 has higher $\eta/\eta_0$ than $\eta/\eta_0$ of the photoelectric conversion elements of Comparative Examples 1 and 2, and has excellent durability.
From the above, it was confirmed that the photoelectric conversion element of the invention has excellent durability.

EXPLANATIONS OF NUMERALS

| 11 | transparent substrate |
|---|---|
| 13 | oxide semiconductor layer |
| 15 | first base material |
| 20 | second base material |
| 30 | sealing portion |
| 30A | cell sealing portion |
| 31A | first cell sealing portion |
| 31a | outer sealing portion |
| 31b | inner sealing portion |
| 31c | inner opening |
| 31d | sealing connection portion |
| 31e | main sealing connection body |
| 31f | protrusion portion |
| 50, 50A to 50D | photoelectric conversion cell |
| 100 to 700 | photoelectric conversion element |
| 601 | insulating substrate (second base material) |
| 620 | counter electrode |
| $t_1$ | thickness of outer sealing portion |
| $t_2$ | thickness of inner sealing portion |
| $t_3$ | maximum thickness of sealing connection portion 31d |
| $w_1$ | width of outer sealing portion 31a |
| $w_2$ | total width |

**Claims**

1.  A photoelectric conversion element comprising at least one photoelectric conversion cell,
    wherein the photoelectric conversion cell includes
    a first base material having a transparent substrate,
    a second base material facing the first base material, and
    an oxide semiconductor layer provided between the first base material and the second base material,
    the at least one photoelectric conversion cell has a sealing portion connecting the first base material and the second base material of the at least one photoelectric conversion cell,
    the sealing portion has a first sealing portion provided between the first base material and the second base material, and
    the first sealing portion has an annular outer sealing portion, and
    at least one inner sealing portion provided inside the outer sealing portion to form cell spaces, the number of the cell spaces being the same as the number of photoelectric conversion cells,
    wherein a thickness of the outer sealing portion is larger than a thickness of the inner sealing portion.

2.  The photoelectric conversion element according to claim 1, wherein a ratio of the thickness of the outer sealing portion to the thickness of the inner sealing portion is in a range of 1.1 to 2.0.

3.  The photoelectric conversion element according to claim 1 or 2, wherein a dye is supported in the oxide semiconductor layer.

4.  The photoelectric conversion element according to any one of claims 1 to 3,
    wherein the at least one photoelectric conversion cell is configured as a plurality of photoelectric conversion cells, and
    the first sealing portion has
    a plurality of annular first cell sealing portions including a portion of the outer sealing portion and the inner sealing portion partitioning an inner opening of the annular outer sealing portion, and surrounding the oxide semiconductor layer, and
    a sealing connection portion between inner sealing portions of first cell sealing portions adjacent to each other among the plurality of first cell sealing portions, the sealing connection portion connecting the inner sealing portions to each other.

5.  The photoelectric conversion element according to claim 4, wherein a width of the outer sealing portion is narrower than a total width of a width of the sealing connection portion and a width of two inner sealing portions connected by the sealing connection portion.

6.  The photoelectric conversion element according to claim 5, wherein the width of the outer sealing portion is greater than 50% and less than 100% of the total width.

7.  The photoelectric conversion element according to any one of claims 4 to 6,
    wherein second base materials of two photoelectric conversion cells adjacent to each other are separated from each other, and
    the sealing connection portion has
    a main sealing connection portion body having the same thickness as a thickness of the inner sealing portion, and
    a protrusion portion protruding from the main sealing connection portion body to a gap between the second base materials of the two photoelectric conversion cells adjacent to each other.

8.  The photoelectric conversion element according to claim 7, wherein a height of the protrusion portion from the main sealing connection body is in a range of 5 to 100% of a thickness of the second base material in the sealing connection portion.

9.  The photoelectric conversion element according to any one of claims 1 to 8, wherein a whole of the transparent substrate is curved to be convex toward a side of the second base material.

10. The photoelectric conversion element according to any one of claims 1 to 9,
    wherein the first base material has a first electrode, and
    the second base material has a second electrode.

# Fig.1

Fig.2

EP 3 101 668 A1

27

# Fig.3

20

22    21

# Fig.4

# Fig.5

31

31A

31a

31A

31A

31A

20

20

20

20

31c

31d    31b

31b

31c

31d    31b

31b

31c

31d    31b

31b

31c

# Fig.6

# Fig.7

# Fig.8

# Fig.9

# Fig.10

# Fig.11

# Fig.12

# Fig.13

EP 3 101 668 A1

# Fig.14

# Fig.15

## INTERNATIONAL SEARCH REPORT

| International application No. |
| --- |
| PCT/JP2015/052712 |

A.  CLASSIFICATION OF SUBJECT MATTER
*H01G9/20*(2006.01)i, *H01L51/44*(2006.01)i

According to International Patent Classification (IPC) or to both national classification and IPC

B.  FIELDS SEARCHED

Minimum documentation searched (classification system followed by classification symbols)
H01G9/20, H01L51/44, H01M14/00

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | JP 2007-173045 A  (Shinko Electric Industries Co., Ltd.), 05 July 2007 (05.07.2007), claims; fig. 4 (Family: none) | 1-10 |
| A | JP 2013-201099 A  (Fujikura Ltd.), 03 October 2013 (03.10.2013), claims; fig. 1 (Family: none) | 1-10 |
| A | JP 2003-223939 A  (Nippon Shokubai Co., Ltd.), 08 August 2003 (08.08.2003), claims; fig. 3 (Family: none) | 1-10 |

☒  Further documents are listed in the continuation of Box C.          ☐   See patent family annex.

| | |
| --- | --- |
| *  Special categories of cited documents: <br> "A"  document defining the general state of the art which is not considered   to be of particular relevance <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
| --- | --- |
| 18 March 2015 (18.03.15) | 31 March 2015 (31.03.15) |

| Name and mailing address of the ISA/ <br>   Japan Patent Office <br>   3-4-3,Kasumigaseki,Chiyoda-ku, <br>   Tokyo 100-8915,Japan | Authorized officer <br><br> Telephone No. |
| --- | --- |

Form PCT/ISA/210 (second sheet) (July 2009)

## INTERNATIONAL SEARCH REPORT

International application No.

PCT/JP2015/052712

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-147037 A  (Fujikura Ltd.),<br>26 June 2008 (26.06.2008),<br>claims; fig. 1<br>(Family: none) | 1-10 |
| A | JP 2010-80265 A  (Dainippon Printing Co., Ltd.),<br>08 April 2010 (08.04.2010),<br>claims; fig. 4<br>(Family: none) | 1-10 |
| A | WO 2012/118028 A1  (Fujikura Ltd.),<br>07 September 2012 (07.09.2012),<br>claims; fig. 1<br>& JP 5597304 B          & US 2014/0000678 A1<br>& EP 2683020 A1          & CN 103262337 A | 1-10 |

Form PCT/ISA/210 (continuation of second sheet) (July 2009)

**EP 3 101 668 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   WO 2012118028 A